# EUROPEAN PATENT SPECIFICATION

(11) **EP 4 428 696 B1**
(45) Date of publication and mention of the grant of the patent: **15.04.2026**
(21) Application number: 22897463.0
(22) Date of filing: 18.10.2022
(51) Int. Cl.: G06F 12/0888, G06F 12/10

(54) **MAINTENANCE METHOD FOR TRANSLATION LOOKASIDE BUFFER, AND RELATED DEVICE**
WARTUNGSVERFAHREN FÜR ÜBERSETZUNGSPUFFER UND ZUGEHÖRIGE VORRICHTUNG
PROCÉDÉ DE MAINTENANCE POUR TAMPON DE TRADUCTION, ET DISPOSITIF ASSOCIÉ

(30) Priority: 27.11.2021 CN 202111438805
(43) Date of publication of application: 11.09.2024
(73) Proprietor: Huawei Technologies Co., Ltd., Shenzhen, Guangdong 518129 (CN)
(72) Inventor: WAN, Bo, Shenzhen, Guangdong 518129 (CN); JIANG, Yifei, Shenzhen, Guangdong 518129 (CN); FAN, Henglong, Shenzhen, Guangdong 518129 (CN)
(74) Representative: Maiwald GmbH
(86) International application number: PCT/CN2022/126013
(87) International publication number: WO 2023/093380

(56) References cited:
- CN-A- 104 021 063
- CN-A- 104 021 344
- CN-A- 113 032 101
- US-A1- 2005 172 099
- US-A1- 2011 161 620
- US-A1- 2017 357 595
- US-B2- 9 916 257

## Description

### TECHNICAL FIELD

This application relates to the field of computer technologies, and in particular, to a translation lookaside buffer maintenance method and a related device.

### BACKGROUND

In the computing industry, a cloud computing service is usually provided by a large quantity of servers, and a quantity of computing cores on a single server continuously increases with an increasing demand for the cloud service, and may even reach more than 200. To make full use of multi-core parallel performance, a software program like MapReduce (a programming model), a software transactional memory, or a concurrent garbage collection mechanism is usually run in parallel on a plurality of computing cores. Further, in a memory access process of the software program, a translation lookaside buffer (translation lookaside buffer, TLB) can effectively improve memory access performance. Correspondingly, TLB consistency further needs to be maintained between the computing cores, to avoid a TLB access error. Different threads in a same process may be run on different computing cores. When one of the threads modifies a page table, not only TLB information of a computing core on which the thread is located needs to be modified, but also another computing core needs to be notified to update corresponding TLB information, to ensure consistency of TLB information of different computing cores.

However, a current TLB consistency maintenance process is complex and a delay is long, resulting in a great decrease in overall memory access performance of a multi-core device like a server.

Therefore, how to reduce a TLB consistency maintenance delay is an urgent problem to be resolved. The US 2017357595 A1 refers to TLB shootdowns for low overhead. The US 2013031333 A1 refers to methods and an apparatus for efficient TLB (translation look-aside buffer) shoot-downs for heterogeneous devices sharing virtual memory in a multi-core system.

### SUMMARY

Embodiments of this application provide a translation lookaside buffer maintenance method and a related device, to greatly reduce a TLB consistency maintenance delay. The invention is set out in the appended set of claims.

The translation lookaside buffer maintenance method provided in embodiments of this application may be executed by an electronic device or the like. The electronic device refers to a device that can be abstracted as a computer system, where an electronic device that supports a maintenance function of a translation lookaside buffer may also be referred to as a translation lookaside buffer maintenance apparatus. The translation lookaside buffer maintenance apparatus may be an entire device of the electronic device, for example, a smart wearable device, a smartphone, a tablet computer, a notebook computer, a desktop computer, a vehicle-mounted computer, or a server; or may be a system/an apparatus including a plurality of entire devices; or may be a part of a component in the electronic device, for example, a chip related to a translation lookaside buffer maintenance function, for example, a system-on-a-chip (system-on-a-chip, SoC). This is not specifically limited in embodiments of this application. A system chip is also referred to as the system-on-a-chip.

According to a first aspect, an embodiment of this application provides a translation lookaside buffer maintenance method, applied to an electronic device, where the electronic device includes a plurality of physical central processing units CPUs, a first process is run on the electronic device, the first process currently includes M first threads, the M first threads are currently being respectively run on M physical CPUs of the plurality of physical CPUs, and M is an integer greater than or equal to 1. The method includes: determining a physical CPU range S1 currently corresponding to the first process, where the physical CPU range S1 includes the M physical CPUs on which the first threads in the first process are currently being run; and updating, based on page table information maintained by the first process, translation lookaside buffer TLB information maintained by all physical CPUs in the physical CPU range S1.

According to the method provided in the first aspect, in a non-virtualization scenario, a physical CPU range (for example, the physical CPU range S1) currently corresponding to any process (for example, the first process) may be first determined based on physical CPUs on which a plurality of threads (for example, the first threads) in the process currently are run. In this way, after page table information maintained by the process is modified, the TLB information maintained by all the physical CPUs in the physical CPU range may be synchronously updated based on the modified page table information, to avoid a TLB access error when the plurality threads in the process are run on all the physical CPUs in the physical CPU range. Therefore, compared with a conventional technology in which after page table information of a process is modified, a TLB refresh request is sent to all physical CPUs in a device or a system without distinction, and all the physical CPUs need to be waited to complete TLB refresh (or TLB information update), thereby causing long TLB consistency maintenance time and high overheads, in embodiments of this application, TLB consistency can be maintained in a specific and small range, thereby greatly reducing maintenance overheads and a maintenance delay, and effectively improving memory access performance of an entire system. It should be understood that, in embodiments of this application, because each process maintains a piece of page table information of the process, corresponding TLB consistency maintenance needs to be performed only for a physical CPU on which the process is currently being run. In this way, in embodiments of this application, a physical CPU range for which TLB consistency maintenance needs to be performed each time can be greatly narrowed down while the TLB access error is effectively avoided, thereby implementing efficient, convenient, and accurate TLB consistency maintenance.

In a possible implementation, the M physical CPUs include a first physical CPU and M-1 second physical CPUs, where before the first thread is run on the first physical CPU, a second thread is run on the first physical CPU, and M-1 first threads of the M first threads are respectively run on the M-1 second physical CPUs; and the method further includes: after a thread on the first physical CPU is switched from the second thread to the first thread in the first process, determining whether the second thread belongs to the first process; and if the second thread does not belong to the first process, updating a physical CPU range S2 corresponding to the first process to obtain the current physical CPU range S1, where the physical CPU range S2 includes the M-1 second physical CPUs on which the first threads in the first process are run before update.

In embodiments of this application, to ensure that a physical CPU range corresponding to any process is accurate at any moment in a running process, and to ensure accurate and effective TLB consistency maintenance, the physical CPU range needs to be updated in real time. Specifically, when a thread that is run on any physical CPU (for example, the first physical CPU) is switched, if a thread (for example, the first thread) after switching and the thread (for example, the second thread) before switching belong to different processes (that is, process switching occurs on the first physical CPU, one process is no longer run on the first physical CPU, and another process is to be run on the first physical CPU), a physical CPU range corresponding to the process after switching may be updated, and a current physical CPU (for example, the first physical CPU) is added, to obtain a new physical CPU range (for example, the physical CPU range S1) that includes the current physical CPU. This ensures that TLB consistency maintenance can be subsequently performed in an accurate physical CPU range, to ensure accuracy and effectiveness of the TLB consistency maintenance.

In a possible implementation, the second thread belongs to a second process, where before the first thread is run on the first physical CPU, N second threads in the second process are respectively run on the first physical CPU and N-1 third physical CPUs of the plurality of physical CPUs, and N is an integer greater than or equal to 1; and the method further includes: after the thread on the first physical CPU is switched from the second thread to the first thread in the first process, updating a physical CPU range S3 corresponding to the second process to obtain a physical CPU range S4, where the physical CPU range S3 includes the first physical CPU and the N-1 third physical CPUs on which the second threads in the second process are run before update, and the physical CPU range S4 includes the N-1 third physical CPUs on which the second threads in the second process are currently being run.

In embodiments of this application, as described above, when process switching occurs on any physical CPU (for example, the first physical CPU), not only a physical CPU range corresponding to a process (for example, the first process) after switching needs to be updated in real time, but also a physical CPU range corresponding to a process (for example, the second process) before switching needs to be updated in real time. Specifically, the first physical CPU is deleted from the physical CPU range corresponding to the process before the switching. In this way, it is ensured that a physical CPU on which any process is currently being run is in a physical CPU range currently corresponding to the process. Further, it is ensured that, whenever page table information maintained by any process is modified, TLB consistency maintenance can be efficiently and conveniently performed in an accurate physical CPU range, thereby improving maintenance efficiency.

In a possible implementation, the method further includes: updating, based on the updated physical CPU ranges respectively corresponding to the first process and the second process, a physical CPU range corresponding to the first physical CPU from the physical CPU range S3 to the physical CPU range S1; updating a physical CPU range corresponding to each of the M-1 second physical CPUs from the physical CPU range S2 to the physical CPU range S1; and updating a physical CPU range corresponding to each of the N-1 third physical CPUs from the physical CPU range S3 to the physical CPU range S4.

In embodiments of this application, a physical CPU range corresponding to a process that is currently being run on a physical CPU may be further used as a physical CPU range corresponding to the physical CPU, to provide an accurate range for the physical CPU to subsequently send a TLB refresh request, thereby implementing efficient and convenient TLB consistency maintenance.

In a possible implementation, the electronic device stores physical CPU range information, the physical CPU range information currently includes at least the physical CPU range S1 corresponding to each of the M physical CPUs, and the physical CPU range S4 corresponding to each of the N-1 third physical CPUs.

In embodiments of this application, the electronic device may further store a physical CPU range currently corresponding to each physical CPU, to form physical CPU range information that is globally visible to software and hardware. The range information may provide an accurate range for any physical CPU to subsequently send a TLB refresh request, thereby implementing efficient and convenient TLB consistency maintenance. Optionally, in embodiments of this application, the physical CPU range information that is globally visible to the software and the hardware may be stored in a manner including but not limited to a register group, a memory, a cache (cache), and the like.

In a possible implementation, the updating, based on page table information maintained by the first process, TLB information maintained by all the physical CPUs in the physical CPU range S1 includes: after the page table information maintained by the first process is modified by a first thread that is currently being run on a target physical CPU of the M first physical CPUs, updating, based on the modified page table information, TLB information maintained by the target physical CPU; and sending a TLB refresh request to a remaining physical CPU in the physical CPU range S1 by using the target physical CPU, where the TLB refresh request is used by the remaining physical CPU in the first physical range to synchronously update TLB information maintained by the remaining physical CPU, so that the TLB information maintained by all the physical CPUs in the physical CPU range S1 is consistent.

In embodiments of this application, after a thread (for example, the first thread) that is run on a physical CPU (for example, the target physical CPU) modifies corresponding page table information, the target physical CPU may update, based on the modified page table information, TLB information maintained by the target physical CPU, and send a TLB refresh request to another physical CPU in a current physical CPU range, so that the another physical CPU also synchronously updates, based on the modified page table information, TLB information maintained by the another physical CPU. In this way, it is ensured that TLB information maintained by all the physical CPUs in the physical CPU range is consistent, to avoid a TLB access error when a plurality of threads in a process are run on all the physical CPUs in the physical CPU range. In this way, in embodiments of this application, TLB consistency maintenance can be quickly and conveniently completed in a small range, thereby greatly reducing a TLB maintenance delay. In addition, it should be noted that a sequence in which the target physical CPU modifies the TLB information maintained by the target physical CPU and sends the TLB refresh request to the another physical CPU in the physical CPU range is not specifically limited in embodiments of this application.

In a possible implementation, the sending a TLB refresh request to a remaining physical CPU in the physical CPU range S1 by using the target physical CPU includes: sending the TLB refresh request to an inter-core interconnection network by using the target physical CPU, where the inter-core interconnection network is a bus or a network-on-chip NOC; receiving the TLB refresh request by using the inter-core interconnection network, determining that the TLB refresh request corresponds to the target physical CPU, and obtaining, from the physical CPU range information, the physical CPU range S1 corresponding to the target physical CPU; and sending the TLB refresh request to the remaining physical CPU in the physical CPU range S1 by using the inter-core interconnection network.

In embodiments of this application, the target physical CPU may send the TLB refresh request to the inter-core interconnection network (that is, a communication medium, for example, a bus or a network-on-chip), and then the inter-core interconnection network searches the physical CPU range information for a physical CPU range (for example, the physical CPU range S1) currently corresponding to the target physical CPU, to determine the physical CPU range for which TLB consistency maintenance currently needs to be performed. Then, the inter-core interconnection network may send the TLB refresh request to a physical CPU other than the target physical CPU in the range, so that the physical CPU synchronously update the TLB information maintained by the physical CPU. In this way, TLB consistency maintenance is performed in a necessary and small range while no TLB memory access error is ensured, thereby greatly reducing a TLB consistency maintenance delay.

In a possible implementation, the sending a TLB refresh request to a remaining physical CPU in the physical CPU range S1 by using the target physical CPU includes: obtaining, from the physical CPU range information by using the target physical CPU, the physical CPU range S1 corresponding to the target physical CPU, and sending the TLB refresh request to an inter-core interconnection network, where the TLB refresh request carries indication information related to the physical CPU range S1, and the inter-core interconnection network is a bus or a network-on-chip NOC; receiving the TLB refresh request by using the inter-core interconnection network, and determining the physical CPU range S1 based on the TLB refresh request; and sending the TLB refresh request to the remaining physical CPU in the physical CPU range S1 by using the inter-core interconnection network.

In embodiments of this application, the target physical CPU may further search the physical CPU range information for the physical CPU range (for example, the physical CPU range S1) currently corresponding to the target physical CPU, to determine the physical CPU range for which TLB consistency maintenance currently needs to be performed. Then, the target physical CPU may send the TLB refresh request to the inter-core interconnection network, and the inter-core interconnection network sends, based on the related indication information carried in the TLB refresh request, the TLB refresh request to the physical CPU other than the target physical CPU in the corresponding physical CPU range, so that the physical CPU synchronously update TLB information maintained by the physical CPU. In this way, TLB consistency maintenance is performed in the necessary and small range while no TLB memory access error is ensured, thereby greatly reducing the TLB consistency maintenance delay.

In a possible implementation, the method further includes: receiving a feedback signal sent by each of the M-1 physical CPUs in the physical CPU range S1, and determining, based on the feedback signal, that the TLB information maintained by all the physical CPUs in the physical CPU range S1 is consistent.

In embodiments of this application, any physical CPU (for example, the target physical CPU) that executes a TLB refresh instruction can continue to execute a subsequent instruction only after receiving a feedback signal of a remaining physical CPU in a current physical CPU range. In other words, the target physical CPU needs to be blocked until current TLB consistency maintenance is completed, to ensure that no error occurs in subsequent TLB memory access. Compared with a conventional technology in which all physical CPUs in a device or a system need to complete TLB refresh, thereby causing large TLB maintenance overheads, long time, and long blocking time of a target physical CPU, in embodiments of this application, TLB consistency maintenance can be efficiently and conveniently performed in a necessary and small range while no TLB memory access error is ensured, thereby greatly shortening blocking duration of the target physical CPU and improving memory access performance of an entire system.

In a possible implementation, the TLB refresh request carries corresponding TLB refresh information, where the TLB refresh information includes one or more of a process identifier corresponding to the first process, or a virtual address and a virtual address range that correspond to the modified page table information, and the TLB refresh request is specifically used by the remaining physical CPU in the physical CPU range S1 to update, by using hardware based on the TLB refresh information and in a case in which a thread on the remaining physical CPU is kept running, the TLB information maintained by the remaining physical CPU.

In embodiments of this application, the TLB refresh request further carries corresponding TLB refresh information. The information may include but is not limited to a process identifier corresponding to a current process (for example, the first process), a virtual address and a virtual address range that correspond to modified page table information, or the like. In this way, after receiving the TLB refresh request, the physical CPU in the current physical CPU range may quickly and accurately complete TLB refresh based on the TLB refresh information carried in the request, to ensure consistency of TLB information maintained by each physical CPU in the range. In addition, a TLB refresh process in embodiments of this application may be directly completed by using hardware without interrupting a software process (for example, the first thread) that is run on each physical CPU, thereby further improving efficiency and convenience of TLB consistency maintenance.

According to a second aspect, an embodiment of this application provides a translation lookaside buffer maintenance method, applied to an electronic device, where the electronic device includes a plurality of physical central processing units CPUs, a first virtual machine is run on the electronic device, the first virtual machine currently includes M first virtual CPUs, the M first virtual CPUs are currently being respectively run on M physical CPUs of the plurality of physical CPUs, and M is an integer greater than or equal to 1; and the method includes: determining a physical CPU range S1 corresponding to the first virtual machine, where the physical CPU range S1 includes the M physical CPUs on which the first virtual CPUs in the first virtual machine are currently being run; and updating, based on page table information maintained by the first virtual machine, translation lookaside buffer TLB information maintained by all the physical CPUs in the physical CPU range S1.

According to the method provided in the second aspect, in a virtualization scenario, a physical CPU range (for example, the physical CPU range S1) currently corresponding to any virtual machine (for example, the first virtual machine) may be first determined based on physical CPUs on which a plurality of virtual CPUs (for example, the first virtual CPUs) in the virtual machine currently are run. In this way, after page table information maintained by the virtual machine is modified, the TLB information maintained by all the physical CPUs in the physical CPU range may be synchronously updated based on the modified page table information, to avoid a TLB access error when the plurality virtual CPUs in the virtual machine are run on all the physical CPUs in the physical CPU range. Therefore, compared with a conventional technology in which after page table information of a virtual machine is modified, a TLB refresh request is sent to all physical CPUs in a device or a system without distinction, and all the physical CPUs need to be waited to complete TLB refresh (or TLB information update), thereby causing long TLB consistency maintenance time and high overheads, in embodiments of this application, TLB consistency can be maintained in a specific and small range, thereby greatly reducing maintenance overheads and a maintenance delay, and effectively improving memory access performance of an entire device or system. It should be understood that, in embodiments of this application, because each virtual machine maintains a piece of page table information of the virtual machine, corresponding TLB consistency maintenance needs to be performed only for a physical CPU on which the virtual machine is currently being run. In this way, in embodiments of this application, a physical CPU range for which TLB consistency maintenance needs to be performed each time can be greatly narrowed down while the TLB access error is effectively avoided, thereby implementing efficient, convenient, and accurate TLB consistency maintenance.

It may be understood that, in embodiments of this application, a solution in the virtualization scenario is similar to a solution in the non-virtualization scenario. Therefore, for beneficial effects in the virtualization scenario, refer to that of the foregoing non-virtualization scenario. Details are not described herein again.

With reference to the method provided in the first aspect, in embodiments of this application, a physical CPU range corresponding to each process may be maintained, so that efficient and convenient TLB consistency maintenance can be performed in a necessary and small physical CPU range in both the virtualization scenario and the non-virtualization scenario.

In a possible implementation, the M physical CPUs include a first physical CPU and M-1 second physical CPUs, where before the first virtual CPU is run on the first physical CPU, a second virtual CPU is run on the first physical CPU, and M-1 first virtual CPUs of the M first virtual CPUs are respectively run on the M-1 second physical CPUs; and the method further includes: after a virtual CPU on the first physical CPU is switched from the second virtual CPU to the first virtual CPU in the first virtual machine, determining whether the second virtual CPU belongs to the first virtual machine; and if the second virtual CPU does not belong to the first virtual machine, updating a physical CPU range S2 corresponding to the first virtual machine to obtain the current physical CPU range S1, where the physical CPU range S2 includes the M-1 second physical CPUs on which the first virtual CPUs in the first virtual machine are run before update.

In a possible implementation, the second virtual CPU belongs to a second virtual machine, where before the first virtual CPU is run on the first physical CPU, N second virtual CPUs in the second virtual machine are respectively run on the first physical CPU and N-1 third physical CPUs of the plurality of physical CPUs, and N is an integer greater than or equal to 1; and the method further includes: after the virtual CPU on the first physical CPU is switched from the second virtual CPU to the first virtual CPU in the first virtual machine, updating a physical CPU range S3 corresponding to the second virtual machine to obtain a physical CPU range S4, where the physical CPU range S3 includes the first physical CPU and the N-1 third physical CPUs on which the second virtual CPUs in the second virtual machine are run before update, and the physical CPU range S4 includes the N-1 third physical CPUs on which the second virtual CPUs in the second virtual machine are currently being run.

In a possible implementation, the method further includes: updating, based on the updated physical CPU ranges respectively corresponding to the first virtual machine and the second virtual machine, a physical CPU range corresponding to the first physical CPU from the physical CPU range S3 to the physical CPU range S1; updating a physical CPU range corresponding to each of the M-1 second physical CPUs from the physical CPU range S2 to the physical CPU range S1; and updating a physical CPU range corresponding to each of the N-1 third physical CPUs from the physical CPU range S3 to the physical CPU range S4.

In a possible implementation, the electronic device stores physical CPU range information, the physical CPU range information currently includes at least the physical CPU range S1 corresponding to each of the M physical CPUs, and the physical CPU range S4 corresponding to each of the N-1 third physical CPUs.

In a possible implementation, the updating, based on page table information maintained by the first virtual machine, TLB information maintained by all the physical CPUs in the physical CPU range S1 includes: after the page table information maintained by the first virtual machine is modified by a first virtual CPU that is currently being run on a target physical CPU of the M first physical CPUs, updating, based on the modified page table information, TLB information maintained by the target physical CPU; and sending a TLB refresh request to a remaining physical CPU in the physical CPU range S1 by using the target physical CPU, where the TLB refresh request is used by the remaining physical CPU in the first physical range to synchronously update TLB information maintained by the remaining physical CPU, so that the TLB information maintained by all the physical CPUs in the physical CPU range S1 is consistent.

In a possible implementation, the sending a TLB refresh request to a remaining physical CPU in the physical CPU range S1 by using the target physical CPU includes: sending the TLB refresh request to an inter-core interconnection network by using the target physical CPU, where the inter-core interconnection network is a bus or a network-on-chip NOC; receiving the TLB refresh request by using the inter-core interconnection network, determining that the TLB refresh request corresponds to the target physical CPU, and obtaining, from the physical CPU range information, the physical CPU range S1 corresponding to the target physical CPU; and sending the TLB refresh request to the remaining physical CPU in the physical CPU range S1 by using the inter-core interconnection network.

In a possible implementation, the sending a TLB refresh request to a remaining physical CPU in the physical CPU range S1 by using the target physical CPU includes: obtaining, from the physical CPU range information by using the target physical CPU, the physical CPU range S1 corresponding to the target physical CPU, and sending the TLB refresh request to an inter-core interconnection network, where the TLB refresh request carries indication information related to the physical CPU range S1, and the inter-core interconnection network is a bus or a network-on-chip NOC; receiving the TLB refresh request by using the inter-core interconnection network, and determining the physical CPU range S1 based on the TLB refresh request; and sending the TLB refresh request to the remaining physical CPU in the physical CPU range S1 by using the inter-core interconnection network.

In a possible implementation, the method further includes: receiving a feedback signal sent by each of the M-1 physical CPUs in the physical CPU range S1, determining, based on the feedback signal, that the TLB information maintained by all the physical CPUs in the physical CPU range S1 is consistent, and executing a subsequent instruction.

In a possible implementation, the TLB refresh request carries corresponding TLB refresh information, where the TLB refresh information includes one or more of a virtual machine identifier corresponding to the first virtual machine, or a virtual address and a virtual address range that are in the virtual machine and that correspond to the modified page table information, and the TLB refresh request is specifically used by the remaining physical CPU in the physical CPU range S1 to update, by using hardware based on the TLB refresh information and in a case in which a virtual CPU on the remaining physical CPU is kept running, the TLB information maintained by the remaining physical CPU.

According to a third aspect, an embodiment of this application provides an electronic device, where the electronic device includes a plurality of physical central processing units CPUs, a first process is run on the electronic device, the first process currently includes M first threads, the M first threads are currently being respectively run on M physical CPUs of the plurality of physical CPUs, and M is an integer greater than 1. The M physical CPUs are configured to determine a physical CPU range S1 corresponding to the first process, where the physical CPU range S1 includes the M physical CPUs; and the M physical CPUs are configured to: when page table information maintained by the first process is modified, synchronously update, based on the modified page table information, translation lookaside buffer TLB information maintained by all the physical CPUs in the physical CPU range S1.

Optionally, for a specific function of the electronic device in the third aspect, refer to a method procedure provided in the first aspect. Details are not described herein again.

According to a fourth aspect, an embodiment of this application provides an electronic device, where the electronic device includes a plurality of physical central processing units CPUs, a first virtual machine is run on the electronic device, the first virtual machine currently includes M first virtual CPUs, the M first virtual CPUs are currently being respectively run on M physical CPUs of the plurality of physical CPUs, and M is an integer greater than 1. The M physical CPUs are configured to determine a physical CPU range S1 corresponding to the first virtual machine, where the physical CPU range S1 includes the M physical CPUs; and the M physical CPUs are configured to: when page table information maintained by the first virtual machine is modified, synchronously update, based on the modified page table information, translation lookaside buffer TLB information maintained by all the physical CPUs in the physical CPU range S1.

Optionally, for a specific function of the electronic device in the fourth aspect, refer to a method procedure provided in the second aspect. Details are not described herein again.

According to a fifth aspect, an embodiment of this application provides an electronic device, where the electronic device includes a processor, and the processor is configured to support the electronic device to perform a corresponding function in any translation lookaside buffer maintenance method provided in the first aspect or the second aspect. The electronic device may further include a memory, where the memory is configured to be coupled to the processor, and the memory stores program instructions and data that are necessary for the electronic device. The electronic device may further include a communication interface, used for communication between the electronic device and another device or a communication network.

According to a sixth aspect, an embodiment of this application provides a computer-readable storage medium, where the computer-readable storage medium stores a computer program, and when the computer program is executed by a processor, any translation lookaside buffer maintenance method procedure provided in the first aspect or the second aspect is implemented.

According to a seventh aspect, an embodiment of this application provides a computer program, where the computer program includes instructions, and when the computer program is executed by a computer, the computer is enabled to perform any translation lookaside buffer maintenance method procedure provided in the first aspect or the second aspect.

According to an eighth aspect, an embodiment of this application provides a chip, where the chip includes a processor and a communication interface, the processor is configured to invoke instructions from the communication interface and run the instructions, and when the processor executes the instructions, the chip is enabled to perform any translation lookaside buffer maintenance method procedure provided in the first aspect or the second aspect.

According to a ninth aspect, an embodiment of this application provides a chip system, where the chip system includes the electronic device according to any one of the third aspect or the fourth aspect, and is configured to implement a function related to any translation lookaside buffer maintenance method procedure provided in the first aspect or the second aspect. In a possible design, the chip system further includes a memory, where the memory is configured to store program instructions and data that are necessary for the translation lookaside buffer maintenance method. The chip system may include a chip, or may include a chip and another discrete component.

### BRIEF DESCRIPTION OF DRAWINGS

FIG. 1 is a schematic diagram of a system architecture according to an embodiment of this application;
FIG. 2 is a schematic diagram of an application scenario according to an embodiment of this application;
FIG. 3 is a schematic flowchart of a translation lookaside buffer maintenance method according to an embodiment of this application;
FIG. 4a is a schematic flowchart of updating a physical CPU range according to an embodiment of this application;
FIG. 4b is a schematic diagram of physical CPU range information according to an embodiment of this application;
FIG. 4c is a schematic flowchart of updating physical CPU range information according to an embodiment of this application;
FIG. 5a is a schematic flowchart of updating another physical CPU range according to an embodiment of this application;
FIG. 5b is a schematic diagram of other physical CPU range information according to an embodiment of this application;
FIG. 5c is a schematic flowchart of updating other physical CPU range information according to an embodiment of this application;
FIG. 6A and FIG. 6B are schematic diagrams of a TLB refresh procedure according to an embodiment of this application;
FIG. 7 is a schematic diagram of another TLB refresh procedure according to an embodiment of this application;
FIG. 8 is a schematic diagram of still another TLB refresh procedure according to an embodiment of this application; and
FIG. 9 is a schematic diagram of a structure of an electronic device according to an embodiment of this application.

### DESCRIPTION OF EMBODIMENTS

The following describes embodiments of this application with reference to the accompanying drawings in embodiments of this application.

In the specification, claims, and accompanying drawings of this application, the terms "first", "second", and the like are intended to distinguish between different objects but do not indicate a particular order. In addition, terms such as "include" and "have" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device. It should be noted that when an element is referred to as "coupled" or "connected" to another one or more elements, the element may be directly connected to the another one or more elements, or may be indirectly connected to the another one or more elements.

It should be understood that in this application, "at least one (item)" refers to one or more and "a plurality of" refers to two or more. The term "and/or" is used for describing an association relationship between associated objects, and represents that three relationships may exist. For example, "A and/or B" may represent the following three cases: Only A exists, only B exists, and both A and B exist, where A and B may be singular or plural. A character "/" usually indicates an "or" relationship between the associated objects. "At least one of the following items (pieces)" or a similar expression thereof refers to any combination of these items, including any combination of singular items (pieces) or plural items (pieces). For example, at least one of a, b, or c may indicate a, b, c, a and b, a and c, b and c, or a, b, and c, where a, b, and c may be singular or plural.

"An embodiment" mentioned in the specification indicates that a particular characteristic, structure or feature described with reference to this embodiment may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that embodiments described in the specification may be combined with another embodiment.

The terms "component", "module", and "system" and the like used in this specification indicate a computer-related entity, hardware, firmware, a combination of hardware and software, software, or software being executed. For example, a component may be but is not limited to a process that is run on a processor, a processor, an object, an executable file, an execution thread, a program, and/or a computer. As illustrated by using figures, both an application that is run on the processor and the processor may be components. One or more components may reside within the process and/or the execution thread, and the component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network, for example, the Internet interacting with other systems by using the signal).

First, some terms in this application are explained and described, to facilitate understanding by a person skilled in the art.
(1) A physical central processing unit (central processing unit, CPU) usually refers to a quantity of CPUs actually configured on a computer. The CPU may be generally classified into a single-core CPU and a multi-core CPU. The single-core CPU generally includes only a single CPU core (or referred to as a physical core, that is, the foregoing computing core), and the multi-core CPU may include a plurality of CPU cores. It should be noted that the physical CPU in embodiments of this application may be a single-core CPU, a multi-core CPU, or a CPU core in a multi-core CPU. This is not explained subsequently. In some non-virtualization scenarios in embodiments of this application, a plurality of threads may be run in parallel on a plurality of physical CPUs, and the plurality of threads may belong to different processes. In some virtualization scenarios in embodiments of this application, a plurality of virtual CPUs (virtual central process unit, vCPU) may be run in parallel on a plurality of physical CPUs, and the plurality of virtual CPUs may belong to different virtual machines.
(2) A process is a running activity that is of a program having a specific independent function and that is about a data set, which is equivalent to an execution procedure of the program. One process may usually include a plurality of threads.
(3) A virtual machine is a complete software-simulated computer system that has complete hardware system functions and that runs in an entirely isolated environment. One virtual machine may usually include a plurality of virtual CPUs.
(4) A page table is a special data structure used to store a correspondence between a logical (virtual) address and a physical address. Each process (or each virtual machine) has a page table of the process (or the virtual machine), and a plurality of threads in the process (or a plurality of virtual CPUs in the virtual machine) share the page table. When a thread (or a virtual CPU) needs to obtain data, the thread (or the virtual CPU) may obtain a physical address by querying the page table to obtain the data.
(5) A translation lookaside buffer, (translation lookaside buffer, TLB) is a small virtual addressing buffer, in which each row stores a block including a single page table entry (page table entry, PTE). The TLB is used for interaction between a virtual address and a physical address, and provides a buffer for searching for the physical address. This can effectively reduce time consumed for searching for the physical address. If there is no TLB, a memory needs to be accessed twice each time data is obtained, that is, querying the page table to obtain the physical address and obtaining the data. Simply speaking, the TLB is a cache (cache) of the page table, and stores a page table entry that is most likely to be accessed currently, and content of the TLB is copies of some page table entries. In embodiments of this application, each process (or each virtual machine) maintains a page table of the process (or the virtual machine), and a plurality of threads in the process (or a plurality of virtual CPUs in the virtual machine) share the page table. When a specific thread in a specific process (or a virtual CPU in a virtual machine) that is run on a local physical CPU modifies page table information, the local physical CPU needs to update TLB information of the local physical CPU, and also needs to notify a remaining physical CPU to synchronously update TLB information of the remaining physical CPU, to maintain TLB information consistency and avoid a TLB access error.

As described above, when a plurality of threads or a plurality of virtual CPUs are run in parallel on a plurality of physical CPUs, to avoid the TLB access error, TLB consistency needs to be maintained between the physical CPUs. There are a plurality of technical solutions, for example, a common TLB shootdown (shootdown) solution that maintains TLB consistency based on an inter-processor interrupt (inter-processor interrupt, IPI), and a TLB broadcast (broadcast) solution that maintains TLB consistency based on a hardware broadcast instruction.

The TLB shootdown solution is used as an example. In a non-virtualization scenario, physical CPUs on which a plurality of threads sharing a page table in a process are located maintain and update TLB information of the physical CPUs by using software. In a virtualization scenario, a physical CPU on which a vCPU is located also maintains and updates TLB information of the physical CPU by using software. Specifically, when any thread in a process (or any vCPU in a virtual machine) that is run on a specific physical CPU (for example, a local physical CPU) modifies page table information shared between a plurality of cores, another physical CPU may be notified in an inter-processor interrupt manner, so that the another physical CPU refreshes (or invalidates) a corresponding TLB entry, to maintain that TLB information on each physical CPU is latest valid information.

However, large software maintenance overheads result in a large delay. Specifically, in the non-virtualization scenario, when starting to send the interrupt to notify another physical CPU, the CPU that generates the IPI needs to keep blocked until the another physical CPU responds with completion of TLB information update. In addition, in the virtualization scenario, to maintain TLB consistency, the virtual machine needs to exit to a hypervisor (a virtual machine monitor) to send the IPI, to notify remote virtual CPUs to refresh the TLB. This operation causes an entry and an exit of the virtual machine, thereby prolonging a software path process and increasing consistency maintenance overheads. In addition, if one of the remote vCPUs is in an offline state (offline), a TLB refresh request can be responded only after the vCPU is scheduled and run again. Consequently, a blocking delay of the virtual machine increases by an order of magnitude, and a TLB consistency maintenance delay in the virtualization scenario further increases.

The TLB broadcast solution is used as an example. In a non-virtualization scenario, when any thread in a process (or any vCPU in a virtual machine) that is run on a physical CPU modifies page table information shared between a plurality of cores, all remaining physical CPUs in a single-server system (for example, a device like a server) may be directly notified, by using hardware broadcast, to refresh TLB information. Similarly, a physical CPU that executes a hardware broadcast instruction needs to keep blocked until receiving a signal indicating that all the remaining physical CPUs in the system feed back that TLB refresh is completed, and the physical CPU can continue to execute a subsequent instruction. The virtualization scenario is similar. Details are not described herein again.

Compared with the foregoing TLB shootdown solution, in the TLB broadcast solution, in a manner of hardware broadcast, a service that is being executed on a remaining physical CPU may not be interrupted and there is no overhead in a software process. In addition, a problem in which the TLB consistency maintenance delay is prolonged due to the entry and the exit of the virtual machine in the virtualization scenario can be avoided, and performance is good. However, as a quantity of physical CPUs in the system increases, the physical CPUs are notified without distinction in a broadcast mechanism, so that a bus is occupied for long time, and a large quantity of bus contention behaviors are caused. Consequently, the TLB consistency maintenance delay continuously increases, and good scalability (scalability) is not provided.

Therefore, to resolve a problem of a long delay in a conventional TLB consistency maintenance conventional technology, a technical problem to be actually resolved in this application includes the following aspects: updating, by using software, a physical CPU range corresponding to a process or a virtual machine that is currently being run; and when page table information maintained by any process is modified, maintaining TLB consistency in the physical CPU range by using hardware. Therefore, time consumed for TLB consistency maintenance is greatly reduced, and memory access performance and efficiency of an entire system are improved.

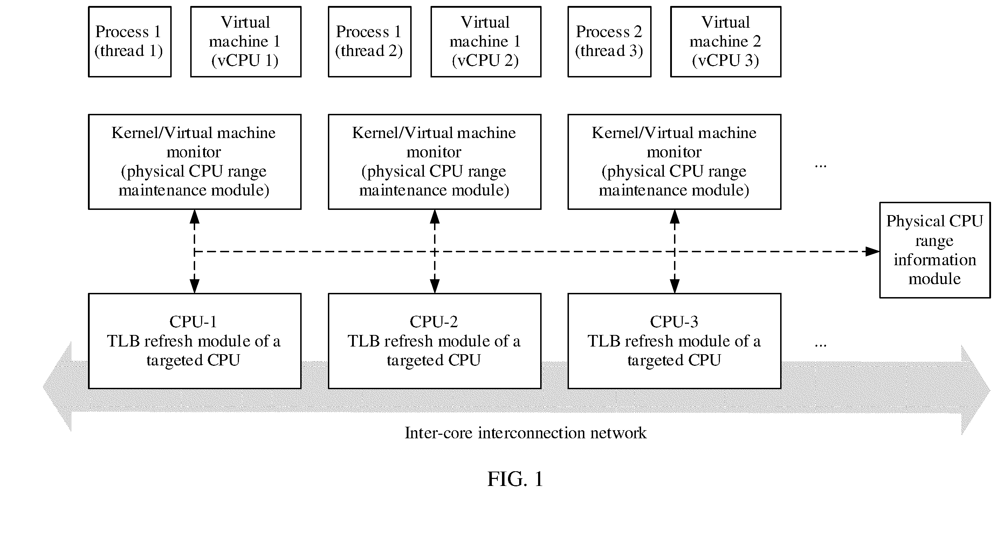

FIG. 1 is a schematic diagram of a system architecture according to an embodiment of this application. The technical solutions in embodiments of this application may be specifically implemented in the system architecture shown as an example in FIG. 1 or a similar system architecture. As shown in FIG. 1, the system architecture may include a plurality of physical CPUs and a physical CPU range information module. The plurality of physical CPUs may specifically include a CPU-1, a CPU-1, a CPU-3, and the like. As shown in FIG. 1, a TLB refresh module for a targeted CPU is disposed in each of the CPU-1, the CPU-1, and the CPU-3. Similarly, a physical CPU range maintenance module is further deployed in a kernel or a virtual machine monitor corresponding to each of the CPU-1, the CPU-1, and the CPU-3. Further, as shown in FIG. 1, in a non-virtualization scenario, a thread 1 in a process 1, a thread 2 in the process 1, and a thread 3 in a process 2 may be respectively run on the CPU-1, the CPU-1, and the CPU-3. As shown in FIG. 1, in a virtualization scenario, a vCPU 1 in a virtual machine 1, a vCPU 2 in the virtual machine 1, and a vCPU 3 in a virtual machine 2 may be respectively run on the CPU-1, the CPU-1, and the CPU-3. As shown in FIG. 1, the system architecture further includes an inter-core interconnection network, and the CPU-1, the CPU-1, and the CPU-3 may communicate with each other through the inter-core interconnection network. Optionally, the inter-core interconnection network may include but is not limited to technical implementation such as a bus or a network-on-chip (network on a chip, NoC).

The physical CPU range maintenance module is configured to: maintain a physical CPU range corresponding to a process or a virtual machine that is currently being run on a physical CPU; and when the process or the virtual machine that is run on the physical CPU is switched, adopt a specific policy to update physical CPU ranges corresponding to the process or the virtual machine before and after switching. Optionally, the physical CPU range maintenance module may be a software module. To be specific, in embodiments of this application, a physical CPU range corresponding to each process or virtual machine may be maintained by using software.

Optionally, in the virtualization scenario, a virtual machine monitor is responsible for maintaining a physical CPU range corresponding to a virtual machine, and a maintenance policy is as follows:
(1) When vCPUs of different virtual machines are switched to go online on a same physical CPU (that is, an online virtual machine is different from a virtual machine that is run on the physical CPU last time), physical CPU ranges corresponding to the two virtual machines before and after switching may be updated by using the virtual machine monitor. For example, as shown in FIG. 1, the vCPU 1 that is currently being run on the CPU-1 belongs to the virtual machine 1. If a vCPU 4 (not shown in the figure) in the virtual machine 2 is switched to go online on the CPU-1 at a next moment, that is, a virtual machine that is run on the CPU-1 is switched from the virtual machine 1 to the virtual machine 2, physical CPU ranges corresponding to the virtual machine 1 and the virtual machine 2 may be updated. As shown in FIG. 1, before the switching, the virtual machine 1 is run on the CPU-1 and the CPU-2. Therefore, a physical CPU range corresponding to the virtual machine 1 before the switching includes the CPU-1 and the CPU-2. After the switching, the virtual machine 1 is no longer run (specifically, the vCPU 1 in the virtual machine 1 is no longer run) on the CPU-1. Therefore, the CPU-1 needs to be deleted from the original physical CPU range, to obtain a physical CPU range currently corresponding to the virtual machine 1, where the updated physical CPU range includes the CPU-2. Correspondingly, as shown in FIG. 1, before the switching, the virtual machine 2 is run on the CPU-3. Therefore, a physical CPU range corresponding to the virtual machine 2 before the switching includes the CPU-3. After the switching, the virtual machine 2 starts to be run (specifically, the vCPU 4 in the virtual machine 2 starts to be run) on the CPU-1. Therefore, the CPU-1 needs to be added to the original physical CPU range, to obtain a physical CPU range currently corresponding to the virtual machine 2, where the updated physical CPU range includes the CPU-1 and the CPU-3. As described above, when a physical CPU range is updated, only a variable (that is, a physical CPU on which a virtual machine is switched, for example, the CPU-1) in the physical CPU range may be updated, and an original entire physical CPU range does not need to be erased and rewritten, to improve update efficiency of the physical CPU range and reduce software maintenance overheads. This is similar in the following non-virtualization scenario. Details are not described again.
(2) When vCPUs of a same virtual machine are switched to go online on a same physical CPU (that is, an online virtual machine is the same as a virtual machine that is run on the physical CPU last time), a physical CPU range corresponding to the virtual machine may not be updated, to reduce an update frequency of the physical CPU range and reduce software maintenance overheads. For example, as shown in FIG. 1, the vCPU 1 that is currently being run on the CPU-1 belongs to the virtual machine 1. If a vCPU 5 (not shown in the figure) in the virtual machine 1 is switched to go online on the CPU-1 at a next moment, that is, a virtual machine that is run on the CPU-1 is still the virtual machine 1, a physical CPU range (including the CPU-1 and the CPU-2) originally corresponding to the virtual machine 1 is kept.

Further, in a case as described in (1), if virtual machine switching occurs on a physical CPU, when physical CPU ranges corresponding to two virtual machines before and after switching are updated, correspondingly, TLB information related to a virtual machine that is about to go online on the physical CPU also needs to be refreshed, so that TLB information currently maintained on the physical CPU corresponds to page table information maintained by a virtual machine that is currently being run. It may be understood that, in a case described in (2), if the physical CPU range does not need to be updated, that is, virtual machine switching does not occur on the physical CPU, correspondingly, TLB information on the physical CPU does not need to be refreshed.

Optionally, in the non-virtualization scenario, a kernel is responsible for maintaining a physical CPU range corresponding to a process, and a maintenance policy is as follows:
(1) When threads of different processes are switched to go online on a same physical CPU (that is, an online process is different from a process that is run on the physical CPU last time), physical CPU ranges corresponding to the two processes before and after switching may be updated by using a process monitor. For example, as shown in FIG. 1, the thread 1 that is currently being run on the CPU-1 belongs to the process 1. If a thread 4 (not shown in the figure) in the process 2 is switched to go online on the CPU-1 at a next moment, that is, a process that is run on the CPU-1 is switched from the process 1 to the process 2, physical CPU ranges corresponding to the process 1 and the process 2 may be updated. As shown in FIG. 1, before the switching, the process 1 is run on the CPU-1 and the CPU-2. Therefore, a physical CPU range corresponding to the process 1 before the switching includes the CPU-1 and the CPU-2. After the switching, the process 1 is no longer run (specifically, the thread in the process 1 is no longer run) on the CPU-1. Therefore, the CPU-1 needs to be deleted from the original physical CPU range, to obtain a physical CPU range currently corresponding to the process 1, where the updated physical CPU range includes the CPU-2. Correspondingly, as shown in FIG. 1, before the switching, the process 2 is run on the CPU-3. Therefore, a physical CPU range corresponding to the process 2 before the switching includes the CPU-3. After the switching, the process 2 starts to be run (specifically, the thread 4 in the process 2 starts to be run) on the CPU-1. Therefore, the CPU-1 needs to be added to the original physical CPU range, to obtain a physical CPU range currently corresponding to the process 2, where the updated physical CPU range includes the CPU-1 and the CPU-3.
(2) When threads of a same process are switched to go online on a same physical CPU (that is, an online process is the same as a process that is run on the physical CPU last time), a physical CPU range corresponding to the process may not be updated, to reduce an update frequency of the physical CPU range and reduce software maintenance overheads. For example, as shown in FIG. 1, the thread 1 that is currently being run on the CPU-1 belongs to the process 1. If a thread 5 (not shown in the figure) in the process 1 is switched to go online on the CPU-1 at a next moment, that is, a process that is run on the CPU-1 is still the process 1, a physical CPU range (including the CPU-1 and the CPU-2) originally corresponding to the process 1 is kept.

In addition, it should be noted that a kernel-mode thread does not belong to the foregoing process. Therefore, the switching between the process and kernel-mode thread does not affect the physical CPU range of the process.

Further, in a case as described in (1), if process switching occurs on a physical CPU, when physical CPU ranges corresponding to two processes before and after switching are updated, correspondingly, TLB information related to a process that is about to go online on the physical CPU also needs to be refreshed, so that TLB information currently maintained on the physical CPU corresponds to page table information maintained by a process that is currently being run. It may be understood that, in a case described in (2), if the physical CPU range does not need to be updated, that is, process switching does not occur on the physical CPU, correspondingly, TLB information on the physical CPU does not need to be refreshed.

The physical CPU range information module is configured to store a physical CPU range that is globally visible to software and hardware and that corresponds to each physical CPU (that is, a physical CPU range corresponding to a process or a virtual machine that is currently being run on each physical CPU). Specifically, in the non-virtualization scenario, physical CPU range information includes physical CPUs on which threads sharing a page table in a process are located. In the virtualization scenario, physical CPU range information includes a physical CPU on which each vCPU in a virtual machine is located. Optionally, the physical CPU range information module may be accessed by a software module (for example, kernel software) and hardware module that are original or newly added, to update or obtain a physical CPU range currently corresponding to each physical CPU (or a process or a virtual machine that is run on each physical CPU).

It is emphasized again that the physical CPU range in embodiments of this application indicates physical CPUs on which a process or a virtual machine is currently being run, and further, indicates a physical CPU range in which the process or the virtual machine needs to maintain TLB consistency. Optionally, implementation of the physical CPU range includes but is not limited to a description manner like a bitmap. As described above, the physical CPU range information module is globally visible, and a manner of implementing physical CPU range information of the module as globally visible includes but is not limited to technical means such as kernel address mapping.

Further, the physical CPU range information module allocates corresponding storage space to each physical CPU, and is dedicated to storing a physical CPU range maintained by a process or a virtual machine that is run on the CPU. Optionally, the physical CPU range information module may include a register group, or may be a part of memory address space, a cache, or the like. This is not specifically limited in embodiments of this application. Optionally, the physical CPU range information module may be located in a public location in a device or a system, or may be located in a physical CPU (for example, the CPU-1, the CPU-1, and the CPU-3). In addition, in the physical CPU range information module, in embodiments of this application, different address physical space may be used to record physical CPU range information for the non-virtualization scenario and the virtualization scenario, so that when a CPU switches between a virtualization mode and a non-virtualization mode, physical CPU range information stored in the CPU does not need to be updated.

The TLB refresh module of the targeted CPU is configured to: after a thread that is run on the local physical CPU (for example, the thread 1 that is run on the CPU-1) modifies page table information maintained by a current process (for example, the process 1), update, based on the modified page table information, TLB information maintained by the local physical CPU (for example, refresh or invalidate a corresponding TLB entry); and send, based on a physical CPU range (for example, including the CPU-1 and the CPU-2) corresponding to the current process, a TLB refresh request to all remaining physical CPUs (for example, including the CPU-2) in the range, thereby greatly narrowing down a physical CPU range on which a TLB that needs to be maintained by hardware is located.

Further, a coverage range of the TLB refresh module of the targeted CPU includes but is not limited to a module on a CPU side and an inter-core interconnection network connected to the CPU. Optionally, the inter-core interconnection network shown in FIG. 1 may obtain, from the physical CPU range information module, a physical CPU range corresponding to a current physical CPU, to send a TLB refresh request to specified physical CPUs (that is, all physical CPUs other than the current physical CPU in the physical CPU range), and receive feedback signals of the specified physical CPUs, to ensure that TLB refresh actions of the specified physical CPUs end, that is, to determine that TLB consistency maintenance is completed.

In conclusion, each part in the system architecture may be located in an electronic device. The electronic device may be a smart wearable device, a smartphone, a tablet computer, a notebook computer, a desktop computer, an in-vehicle computer, a server, or the like. Optionally, the electronic device may be a server, or may be a server cluster or a cloud computing service center including a plurality of servers. Alternatively, the electronic device may be some components in the foregoing device, for example, a chip having the foregoing functions. This is not specifically limited in embodiments of this application.

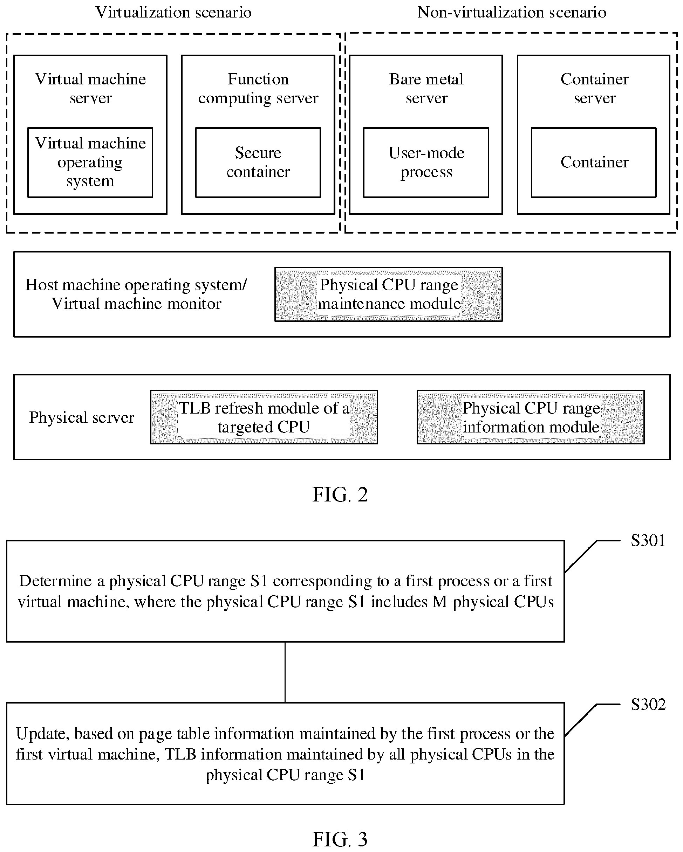

FIG. 2 is a schematic diagram of an application scenario according to an embodiment of this application. As shown in FIG. 2, embodiments of this application may be applied to a non-virtualization scenario in a private cloud and a virtualization scenario in a public cloud, and may be oriented to server types such as a virtual server, a function computing server, a bare metal server, and a container server.

First, as shown in FIG. 2, at a software layer, software procedures in embodiments of this application may be applied to an operating system (that is, a kernel) of a host machine or a virtual machine monitor layer, and software is deployed on a physical server having a TLB refresh module and a physical CPU range information module that support a targeted CPU.

It should be noted that, in a public cloud scenario, products of a plurality of companies (or customers) are deployed on the public cloud. To fully isolate resources of the companies, and prevent services deployed by the companies from affecting each other or even infecting harmful viruses, the services deployed by the companies may be isolated by using a virtualization technology, to ensure security of the services. The virtual server and the function computing server shown in FIG. 2 are common servers in the virtualization scenario. In the virtualization scenario, a virtual machine operating system and a secure container in FIG. 2 may efficiently and conveniently maintain TLB consistency of a virtual machine in a multi-core architecture (that is, a plurality of physical CPUs) in a small range based on the maintenance method provided in embodiments of this application by invoking a TLB refresh instruction.

However, in a private cloud application scenario, because each company locally deploys a service of the company only by using a server of the company (for example, the bare metal server shown in FIG. 2), and does not use a server of another company, that is, does not deploy a service of the another company, and is not affected by the service of the another company. In this case, isolation does not need to be performed by using the virtualization technology. In the non-virtualization scenario, a user-mode process in the bare metal server and a container in the container server shown in FIG. 2 may also maintain TLB consistency of the process or the container in the multi-core architecture efficiently and conveniently in a small range be based on the maintenance method provided in embodiments of this application by invoking the TLB refresh instruction.

In conclusion, embodiments of this application may be applied to the virtualization scenario and the non-virtualization scenario, to maintain TLB consistency in a small range, thereby greatly reducing a TLB maintenance delay in the virtualization scenario and the non-virtualization scenario, and effectively improving memory access performance of an entire system.

FIG. 3 is a schematic flowchart of a translation lookaside buffer maintenance method according to an embodiment of this application. The method may be applied to the system architecture shown in FIG. 1 or the application scenario shown in FIG. 2. The method may be applied to an electronic device, and the electronic device may include a plurality of physical CPUs. In a non-virtualization scenario, a first process may be run on the electronic device, where the first process may currently include M first threads, the M first threads are currently being respectively run on M physical CPUs of the plurality of physical CPUs, and M is an integer greater than or equal to 1. Similarly, in a virtualization scenario, a first virtual machine may be run on the electronic device, where the first virtual machine may currently include M first virtual CPUs, and the M first virtual CPUs are currently being respectively run on M physical CPUs of the plurality of physical CPUs. The method may include the following steps S301 and S302.

Step S301: Determine a physical CPU range S1 corresponding to the first process or the first virtual machine, where the physical CPU range S1 includes the M physical CPUs.

Specifically, in the non-virtualization scenario, if the M first threads in the first process are currently being respectively run on the M physical CPUs, it may be determined that the physical CPU range S1 currently corresponding to the first process includes the M physical CPUs. In the virtualization scenario, if the M first virtual CPUs in the first virtual machine are currently being respectively run on the M physical CPUs, it may be determined that the physical CPU range S1 currently corresponding to the first virtual machine includes the M physical CPUs.

For example, in the non-virtualization scenario, the first process may include 20 first threads. Currently, five first threads of the 20 first threads may be respectively run on five physical CPUs, and remaining 15 first threads are not run on any physical CPU currently (which may have been run or may have not been run). In this case, a physical CPU range (for example, the physical CPU range S1) currently corresponding to the first process may include the five physical CPUs.

For another example, in the virtualization scenario, the first virtual machine may include 10 first virtual CPUs. Currently, eight first virtual CPUs of the 10 first virtual CPUs may be respectively run on eight physical CPUs, and remaining two first virtual CPUs are not run on any physical CPU currently. In this case, a physical CPU range (for example, the physical CPU range S1) currently corresponding to the first virtual machine may include the eight physical CPUs.

Step S302: Update, based on page table information maintained by the first process or the first virtual machine, TLB information maintained by all physical CPUs in the physical CPU range S1.

Specifically, it should be first noted that, as described above, the TLB may be considered as a cache (cache) of a page table, and stores a page table entry that is most likely to be accessed currently, and content of the TLB is copies of some page table entries. In other words, when the M first threads in the first process or the M first virtual CPUs in the first virtual machine are run on the M physical CPUs, TLB information maintained on the M physical CPUs corresponds to the page table information maintained by the first process or the first virtual machine. Therefore, when the page table information maintained by the first process or the first virtual machine is modified (for example, the first thread or the first virtual CPU in the first process or the first virtual machine modifies the page table information), TLB information maintained by each of the M physical CPUs needs to be synchronously updated, to maintain that the TLB information maintained by each of the M physical CPUs is latest valid information, and avoids a TLB access error.

In conclusion, in embodiments of this application, each process (or each virtual machine) maintains a piece of page table information of the process (or the virtual machine), a plurality of threads (or virtual CPUs) in each process (or the virtual machine) share the page table information, and different processes (or virtual machines) are independent of each other. Therefore, after the page table information is modified, corresponding TLB consistency maintenance needs to be performed for only a physical CPU on which a thread (or a virtual CPU) in the process (or the virtual machine) is currently being run, so that the TLB access error can be effectively avoided. In this way, in embodiments of this application, a physical CPU range for which TLB consistency maintenance needs to be performed each time can be minimized while the TLB access error is effectively avoided, thereby implementing efficient, convenient, and accurate TLB consistency maintenance.

Further, as described above, in the non-virtualization scenario, after the threads sharing the page table in the process modify the page table, TLB information of a physical CPU on which each thread in the process is located needs to be updated, to ensure correctness of memory access. In embodiments of this application, to narrow down a physical CPU range on which a TLB that needs to be maintained by hardware is located, each process may record, by using a software variable, information about a physical CPU on which each thread in the process is currently located (for example, M physical CPUs on which the M first threads in the first process are located), and the threads may share the information. In addition, when a process that is run on a physical CPU is switched (that is, a thread that is run after switching and a thread that is run before the switching belong to different processes), a physical CPU range corresponding to each of the two processes needs to be updated in real time, to maintain that a physical CPU range corresponding to each process always includes accurate physical CPU information of the process that is currently being run, thereby providing an accurate range for subsequent TLB consistency maintenance, and ensuring effectiveness of the TLB consistency maintenance.

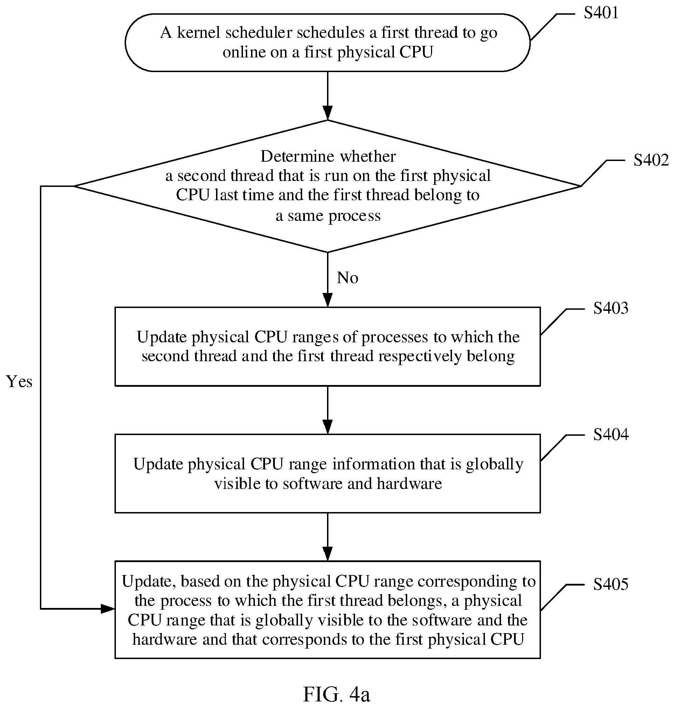

FIG. 4a is a schematic flowchart of updating a physical CPU range according to an embodiment of this application. As shown in FIG. 4a, in a non-virtualization scenario, an update procedure of a physical CPU range corresponding to a process may include the following steps S401 to S405.

Step S401: A kernel scheduler schedules a first thread to go online on a first physical CPU.

Specifically, refer to the embodiment corresponding to FIG. 3. The M physical CPUs may include a first physical CPU and M-1 second physical CPUs, where before the first thread in the first process is run on the first physical CPU, a second thread is run on the first physical CPU, and the first threads may be already run on the M-1 second physical CPUs. In this case, a physical CPU range S2 corresponding to the first process may include only the M-1 second physical CPUs. Then, after the second thread on the first physical CPU is run, the kernel scheduler may schedule the first thread to go online on the first physical CPU. It should be noted that, the first thread herein is not run immediately after going online, but may be run after the physical CPU range is updated subsequently.

Step S402: Determine whether the second thread that is run on the first physical CPU last time and the first thread belong to a same process.

Specifically, after the first thread goes online, the first physical CPU determines whether the second thread that is run last time and the current first thread belong to the same process (for example, the first process), that is, determines whether process switching occurs on the first physical CPU. If the second thread does not belong to the first process, step S403 is performed; or if the second thread belongs to the first process, step S405 is performed.

Step S403: Update physical CPU ranges of processes to which the second thread and the first thread respectively belong.

Specifically, the second thread may belong to the second process, where before the first thread in the first process is run on the first physical CPU, N second threads in the second process may be run on the first physical CPU and other N-1 third physical CPUs, and N is an integer greater than 1. In this case, a physical CPU range S3 corresponding to the second process may include the first physical CPU and the N-1 third physical CPUs. Then, as described above, after the first thread in the first process goes online on the first physical CPU, the second thread in the second process is no longer run on the first physical CPU. Therefore, the physical CPU range S3 corresponding to the second process may be updated to a physical CPU range S4 (including the N-1 third physical CPUs), and the physical CPU range S2 corresponding to the first process may be updated to the physical CPU range S1 (including the first physical CPU and the M-1 second physical CPUs, that is, including the foregoing M physical CPUs).

Optionally, physical CPUs on which the threads sharing a page table in a process are located may be recorded by adding a variable or a data structure to the kernel.

Optionally, it should be noted that when a new process (that is, the first process) is switched to go online on the first physical CPU, page table information in this case is also synchronously switched to page table information maintained by the first process. In this way, the first physical CPU needs to refresh TLB information corresponding to the original second process, and switch (or update) to TLB information corresponding to the page table information of the current first process.

Step S404: Update physical CPU range information that is globally visible to software and hardware.

Specifically, the physical CPU range information that is globally visible to the software and the hardware is synchronously updated based on the updated physical CPU ranges corresponding to the first process and the second process.

It should be noted that the physical CPU range information that is globally visible to the software and the hardware includes a physical CPU range that is globally visible to the software and the hardware and that currently corresponds to each physical CPU. Optionally, in embodiments of this application, a physical CPU range corresponding to a process that is currently being run on each physical CPU may be used as a physical CPU range currently corresponding to each physical CPU. In this case, based on the updated physical CPU ranges respectively corresponding to the first process and the second process, a physical CPU range corresponding to the first physical CPU may be updated from the physical CPU range S3 to the physical CPU range S1; a physical CPU range corresponding to each of the M-1 second physical CPUs may be updated from the physical CPU range S2 to the physical CPU range S1; and a physical CPU range corresponding to each of the N-1 third physical CPUs may be updated from the physical CPU range S3 to the physical CPU range S4. In this way, the updated physical CPU range information that is globally visible to the software and the hardware may include the physical CPU range S1 separately corresponding to the first physical CPU and the M-1 second physical CPUs (that is, the M physical CPUs), and the physical CPU range S4 corresponding to each of the N-1 third physical CPUs.

Optionally, in step S04, only a physical CPU range corresponding to a physical CPU other than the first physical CPU in the physical CPU ranges respectively corresponding to the first process and the second process may be updated. In other words, the physical CPU range corresponding to the first physical CPU is not updated first. This is not specifically limited in embodiments of this application. For example, only a physical CPU range corresponding to each of the M-1 second physical CPUs is updated from the physical CPU range S2 to the physical CPU range S1, and a physical CPU range corresponding to each of the N-1 third physical CPUs is updated from the physical CPU range S3 to the physical CPU range S4.

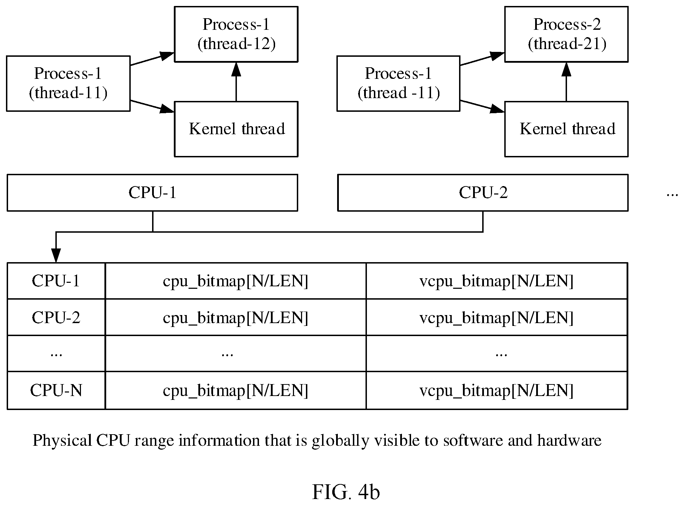

Optionally, FIG. 4b is a schematic diagram of physical CPU range information according to an embodiment of this application. As shown in FIG. 4b, in embodiments of this application, the foregoing physical CPU range information that is globally visible to the software and the hardware may be recorded (or stored) by using a globally visible register group. As shown in FIG. 4b, in an embodiment of this application, two groups of registers that can be accessed only by a host machine in a privileged mode are added for each physical CPU, and the registers are cpu_bitmap and vcpu_bitmap. For example, in a 64-bit system that supports 128 cores, the system adds two cpu_bitmap registers and two vcpu_bitmap registers (LEN=64, N=128) for each physical CPU. For another example, in a 64-bit system with 1024 cores, the system adds 16 cpu_bitmap registers and 16 vcpu_bitmap registers (LEN=64, N=1024) for each physical CPU.

Optionally, in a non-virtualization scenario (or in a non-virtualization mode), a physical CPU range corresponding to a process that is currently being run may be recorded by using cpu_bitmap (that is, physical CPUs on which the threads sharing a page table in the process are currently being run is recorded); and in a virtualization mode, a physical CPU range corresponding to a virtual machine that is currently being run may be recorded by using vcpu_bitmap (that is, a physical CPU on which each vCPU in the virtual machine is run).

Optionally, the newly added register groups shown in FIG. 4b are globally visible, and a kernel and a virtual machine monitor are allowed to access cpu_bitmap and vcpu_bitmap register groups corresponding to all physical CPUs. Specifically, the access may be implemented by using a technology including but not limited to a memory mapping technology.

As shown in FIG. 4b, when thread switching occurs on a physical CPU, if a process to which an online thread belongs is different from a process to which a thread that is run on the CPU last time belongs (for example, in a CPU-2 in FIG. 4b, a process-1 (a thread-11)-a process-2 (a thread-21), or a process-1 (a thread-11)-a kernel thread-a process-2 (a thread-21)), a variable (that is, the CPU-2) of physical CPU ranges stored in processes before and after switching is updated, and cpu_bitmap information corresponding to other physical CPUs in the physical CPU ranges in which the processes before and after the switching are located is updated based on the variable. Specifically, a current physical CPU (that is, the CPU-2) is removed from cpu_bitmap information of the process before the switching, and the current physical CPU (that is, the CPU-2) is added to cpu_bitmap information of the process after the switching.

The following further describes in detail, by using an example, a process of updating the physical CPU range information that is globally visible to the software and the hardware in the non-virtualization scenario.

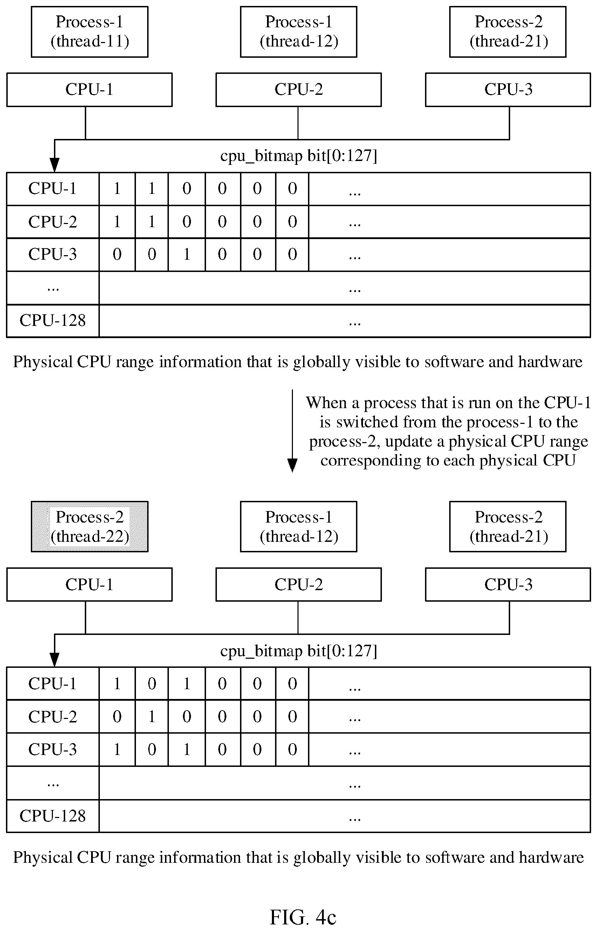

FIG. 4c is a schematic flowchart of updating physical CPU range information according to an embodiment of this application. As shown in FIG. 4c, a 64-bit and 128-core non-virtualization scenario is used as an example. cpu_bitmap may include 128 bits, and each bit (bit) sequentially represents a physical CPU from front to back. For example, a first bit (bit[0]) represents a CPU-1, a second bit (bit[1]) represents a CPU-2, a third bit (bit[2]) represents a CPU-3, and the rest may be deduced by analogy. As shown in FIG. 4c, a thread-11 in a process-1 is currently being run on the CPU-1, a thread-12 in the process-1 is currently being run on the CPU-2, and a thread-21 in a process-2 is currently being run on the CPU-3. In this case, a physical CPU range corresponding to the process-1 includes the CPU-1 and the CPU-2, and a physical CPU range corresponding to the process-2 includes the CPU-3. Correspondingly, in this case, a physical CPU range that is globally visible to software and hardware and that corresponds to the CPU-1 includes the CPU-1 and the CPU-2, a physical CPU range that is globally visible to the software and the hardware and that corresponds to the CPU-2 includes the CPU-1 and the CPU-2, and a physical CPU range that is globally visible to the software and the hardware and that corresponds to the CPU-3 includes the CPU-3.

As shown in FIG. 4c, for the CPU-1, first two bits of cpu_bitmap are all 1, and other remaining bits are all 0, indicating that in this case, the physical CPU range that is globally visible to the software and the hardware and that corresponds to the CPU-1 includes the CPU-1 and the CPU-2. As shown in FIG. 4c, for the CPU-2, the first two bits of the cpu_bitmap are all 1, and the other remaining bits are all 0, indicating that in this case, the physical CPU range that is globally visible to the software and the hardware and that corresponds to the CPU-2 includes the CPU-1 and the CPU-2. As shown in FIG. 4c, for the CPU-3, a third bit of cpu_bitmap is 1, and other remaining bits are all 0, indicating that in this case, the physical CPU range that is globally visible to the software and the hardware and that corresponds to the CPU-3 includes only the CPU-3.

Further, as shown in FIG. 4c, when a process that is run on the CPU-1 is switched from the process-1 to the process-2, a physical CPU range corresponding to each physical CPU is updated. As shown in FIG. 4c, after the process that is run on the CPU-1 is switched, a thread-22 in the process-2 goes online on the CPU-1, the thread-12 in the process-1 is run on the CPU-2, and the thread-21 in the process-2 is run on the CPU-3. Correspondingly, the physical CPU range corresponding to the process-1 includes the CPU-2, and the physical CPU range corresponding to the process-2 includes the CPU-1 and the CPU-3. Correspondingly, in this case, the physical CPU range that is globally visible to the software and the hardware and that corresponds to the CPU-1 includes the CPU-1 and the CPU-3, the physical CPU range that is globally visible to the software and the hardware and that corresponds to the CPU-2 includes the CPU-2, and the physical CPU range that is globally visible to the software and the hardware and that corresponds to the CPU-3 includes the CPU-1 and the CPU-3. Based on this, as shown in FIG. 4c, the procedure may include the following steps.

(1) Delete the CPU-1 from the physical CPU range corresponding to the process-1, and update the physical CPU range corresponding to the CPU-2 based on this. For example, for the CPU-2, cpu_bitmap bit[1]=0, and the physical CPU range that is of the process-1 and that is visible to the hardware is narrowed down.

(2) Add the CPU-1 to the physical CPU range corresponding to the process-2, and update the physical CPU range corresponding to the CPU-3 based on this. For example, for the CPU-3, cpu_bitmap bit[1]=1, and the physical CPU range that is of the process-2 and that is visible to the hardware is expanded.

(3) Before the thread-22 in the process-2 starts to be run on the CPU-1, the physical CPU range (including the CPU-1 and the CPU-3) currently corresponding to the process-2 is used to overwrite and update the physical CPU range corresponding to the CPU-1. For example, for the CPU-1, cpu_bitmap=physical CPU range.

In conclusion, as shown in FIG. 4c, after the update of the physical CPU range information is completed, for the CPU-1, the first bit and the third bit of cpu_bitmap are both 1, and other remaining bits are all 0, indicating that in this case, the physical CPU range that is globally visible to the software and the hardware and that corresponds to the CPU-1 includes the CPU-1 and the CPU-3. For the CPU-2, the second bit of cpu_bitmap is 1, and other remaining bits are all 0, indicating that in this case, the physical CPU range that is globally visible to the software and the hardware and that corresponds to the CPU-2 includes only the CPU-2. For the CPU-3, the first bit and the third bit of cpu_bitmap are both 1, and other remaining bits are all 0, indicating that in this case, the physical CPU range that is globally visible to the software and the hardware and that corresponds to the CPU-3 includes the CPU-1 and the CPU-3.

It should be noted that, as shown in FIG. 4c, each bit represents a physical CPU. Therefore, only one CPU updates a single bit of cpu_bitmap at any moment (that is, a case in which a same bit is concurrently written does not occur). Therefore, in an entire update process, lock holding is not required for cpu_bitmap (that is, lock-free update is implemented). Optionally, when one bit represents one physical CPU set (for example, a cluster (cluster), including a plurality of physical CPU groups), a corresponding physical CPU range may be updated in a lock holding (or lock) manner, to prevent a concurrent read/write error. This is the same in the following virtualization scenario. Details are not described again. Optionally, a lock holding range may be bit (bit), byte (byte), halfword (halfword), word (word), doubleword (doubleword), or the like. Optionally, a type of a lock includes but is not limited to a read/write lock, a mutex, an atomic operation instruction (compare and swap, CAS), and the like. This is not specifically limited in embodiments of this application.

Optionally, in embodiments of this application, globally visible memory address space may be further used to record (or store) the physical CPU range information that is globally visible to the software and the hardware. Specifically, physical memory address space may be used to replace a register group, and two fixed memory regions are created in a memory to separately store a physical CPU range corresponding to a virtual machine or a process that is run on each physical CPU. The software and the hardware obtain a physical CPU range corresponding to each physical CPU by accessing the memory in the physical address space each time. Optionally, in embodiments of this application, a cache may be used to replace a register set to record (or store) the physical CPU range information that is globally visible to the software and the hardware, or the like. This is not specifically limited in embodiments of this application.

Step S405: Update, based on the physical CPU range corresponding to the process to which the first thread belongs, a physical CPU range that is globally visible to the software and the hardware and that corresponds to the first physical CPU.

Specifically, if the second thread that goes online and the first thread that is run last time belong to a same process, that is, process switching does not occur on the physical CPU, the physical CPU range that is globally visible to the software and the hardware and that corresponds to the first physical CPU may be updated based on the physical CPU range currently corresponding to the first process. It may be understood that, although the process switching does not occur on the first physical CPU, the process switching may occur on another CPU, and a physical CPU range corresponding to a corresponding process (for example, the first process) is also updated. In this case, the first physical CPU still needs to update, based on the physical CPU range currently corresponding to the first process, the physical CPU range that is globally visible to the software and the hardware and that corresponds to the first physical CPU. For example, as shown in FIG. 4c, the CPU-2 may be the first physical CPU, and the CPU-2 may switch a thread-13 (not shown in the figure) in the process-1 to go online. However, in this case, the process switching occurs on the CPU-1, and the physical CPU ranges of the process-1 and the process-2 are updated. Therefore, the CPU-2 needs to update, based on a current physical CPU range (including the CPU-2) of the process-1, the physical CPU range that is globally visible to the software and the hardware and that corresponds to the CPU-2.

Correspondingly, as described above, in the virtualization scenario, after virtual CPUs sharing a page table in a virtual machine modify the page table, TLB information of physical CPUs on which the virtual CPUs in the virtual machine are located need to be updated, to ensure correctness of memory access. In embodiments of this application, to narrow down a physical CPU range on which a TLB that needs to be maintained by hardware is located, each virtual machine may record, by using a software variable, information about a physical CPU on which each virtual CPU in the virtual machine is currently located (for example, M physical CPUs on which the M first virtual CPUs in the first virtual machine are located), and the virtual CPUs may share the information. In addition, when a virtual machine that is run on a physical CPU is switched (that is, a virtual CPU that is run after switching and a virtual CPU that is run before the switching belong to different virtual machines), a physical CPU range corresponding to each of the two virtual machines needs to be updated in real time, to maintain that a physical CPU range corresponding to each virtual machine always includes accurate physical CPU information of the virtual machine that is currently being run, thereby providing an accurate range for subsequent TLB consistency maintenance, and ensuring effectiveness of the TLB consistency maintenance.

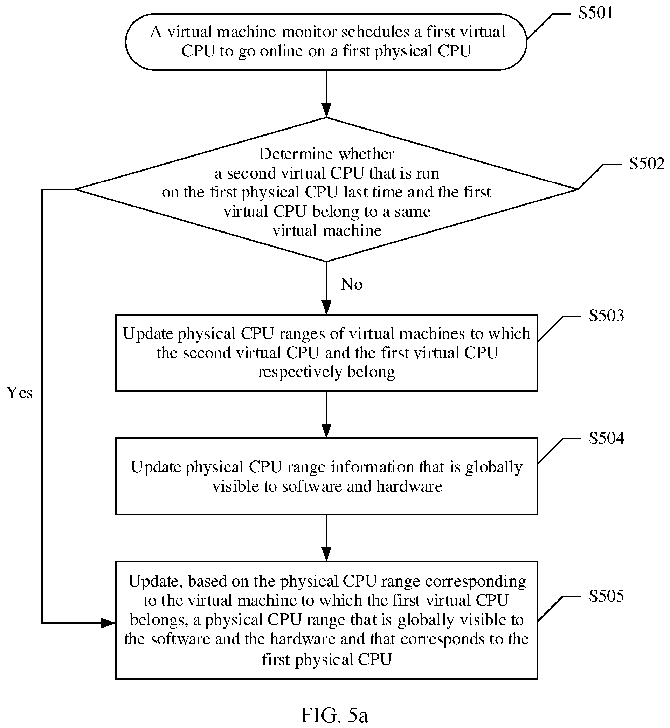

FIG. 5a is a schematic flowchart of updating another physical CPU range according to an embodiment of this application. As shown in FIG. 5a, in a virtualization scenario, an update procedure of a physical CPU range corresponding to a virtual machine may include the following steps S501 to S505.

Step S501: A virtual machine monitor schedules a first virtual CPU to go online on a first physical CPU.

Specifically, for step S501, refer to the step S401 in the embodiment corresponding to FIG. 4a. Details are not described herein again.

Step S502: Determine whether a second virtual CPU that is run on the first physical CPU last time and the first virtual CPU belong to a same virtual machine.

Specifically, for step S502, refer to the step S402 in the embodiment corresponding to FIG. 4a. Details are not described herein again.

Step S503: Update physical CPU ranges of virtual machines to which the second virtual CPU and the first virtual CPU respectively belong.

Specifically, for step S503, refer to the step S403 in the embodiment corresponding to FIG. 4a. Details are not described herein again.

Step S504: Update physical CPU range information that is globally visible to software and hardware.

Specifically, for step S504, refer to the step S404 in the embodiment corresponding to FIG. 4a. Details are not described herein again.

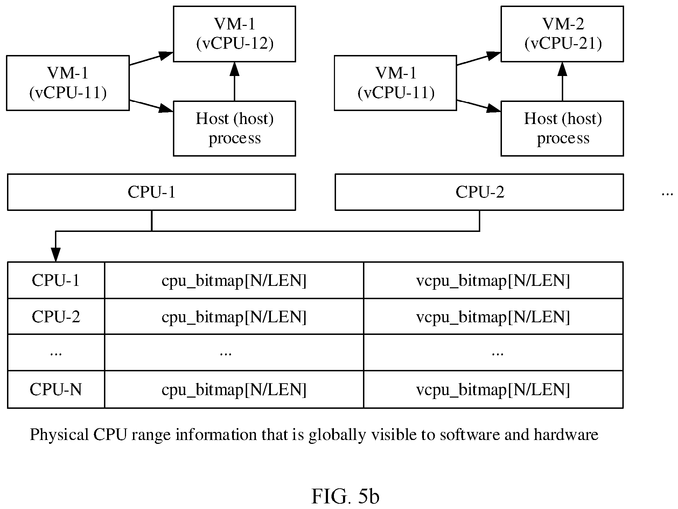

Optionally, FIG. 5b is a schematic diagram of other physical CPU range information according to an embodiment of this application. For descriptions of each part in FIG. 5b, refer to descriptions of the embodiment corresponding to FIG. 4b. Details are not described herein again. As shown in FIG. 5b, when vCPU switching occurs on a physical CPU, if a virtual machine (virtual machine, VM) to which an online vCPU belongs is different from a VM to which a vCPU that is run on the CPU last time belongs (for example, in a CPU-2 in FIG. 5b, a VM-1 (a vCPU-11)→a VM-2 (a vCPU-21), or a VM-1 (a vCPU-11)→a host (host) process→a VM-2 (a vCPU-21)), a variable (that is, the CPU-2) of physical CPU ranges stored in VMs before and after switching is updated, and cpu_bitmap information corresponding to other physical CPUs in the physical CPU ranges in which the VMs before and after the switching are located is updated based on the variable. Specifically, a current physical CPU (that is, the CPU-2) is removed from cpu_bitmap information of the VM before the switching, and the current physical CPU (that is, the CPU-2) is added to cpu_bitmap information of the VM after the switching.

The following further describes in detail, by using an example, a process of updating the physical CPU range information that is globally visible to the software and the hardware in the virtualization scenario.

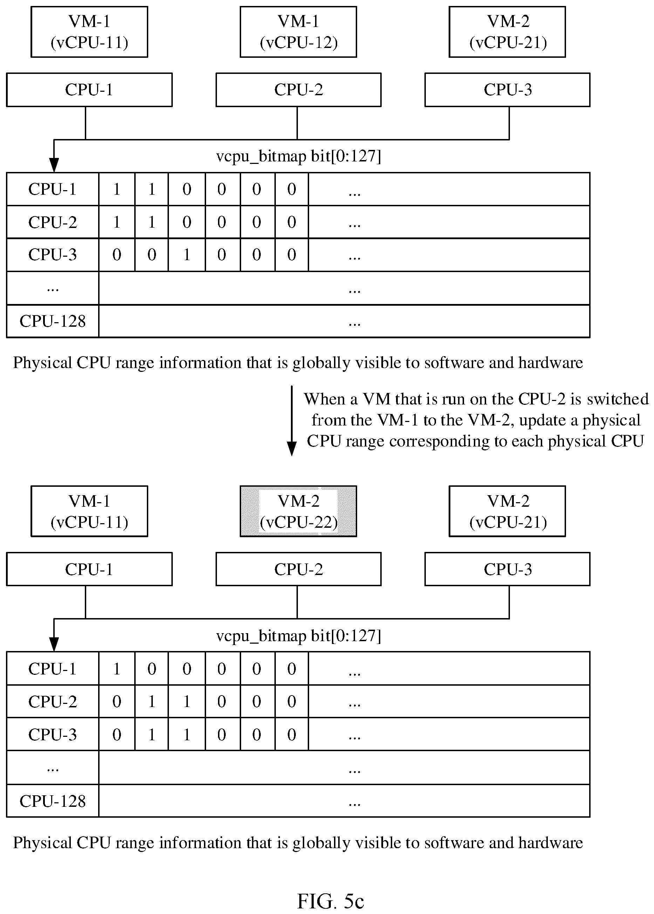

Optionally, FIG. 5c is a schematic flowchart of updating other physical CPU range information according to an embodiment of this application. As shown in FIG. 5c, a 64-bit and 128-core virtualization scenario is used as an example. vcpu_bitmap may include 128 bits, and each bit sequentially represents a physical CPU from front to back. For example, a first bit (bit[0]) represents a CPU-1, a second bit (bit[1]) represents a CPU-2, a third bit (bit[2]) represents a CPU-3, and the rest may be deduced by analogy. As shown in FIG. 5c, a vCPU-11 in a VM-1 is currently being run on a CPU-1, a vCPU-12 in a VM-1 is currently being run on a CPU-2, and a vCPU-21 in a VM-2 is currently being run on a CPU-3. In this case, a physical CPU range corresponding to the VM-1 includes the CPU-1 and the CPU-2, and a physical CPU range corresponding to the VM-2 includes the CPU-3. Correspondingly, in this case, a physical CPU range that is globally visible to software and hardware and that corresponds to the CPU-1 includes the CPU-1 and the CPU-2, a physical CPU range that is globally visible to the software and the hardware and that corresponds to the CPU-2 includes the CPU-1 and the CPU-2, and a physical CPU range that is globally visible to the software and the hardware and that corresponds to the CPU-3 includes the CPU-3.

As shown in FIG. 5c, for the CPU-1, first two bits of vcpu_bitmap are all 1, and other remaining bits are all 0, indicating that in this case, the physical CPU range that is globally visible to the software and the hardware and that corresponds to the CPU-1 includes the CPU-1 and the CPU-2. As shown in FIG. 5c, for the CPU-2, the first two bits of vcpu_bitmap are all 1, and the other remaining bits are all 0, indicating that in this case, the physical CPU range that is globally visible to the software and the hardware and that corresponds to the CPU-2 includes the CPU-1 and the CPU-2. As shown in FIG. 5c, for the CPU-3, a third bit of vcpu_bitmap is 1, and other remaining bits are all 0, indicating that in this case, the physical CPU range that is globally visible to the software and the hardware and that corresponds to the CPU-3 includes only the CPU-3.

Further, as shown in FIG. 5c, when a VM that is run on the CPU-2 is switched from the VM-1 to the VM-2, a physical CPU range corresponding to each physical CPU is updated. As shown in FIG. 5c, after the VM that is run on the CPU-2 is switched, a vCPU-22 in the VM-2 goes online on the CPU-2, the vCPU-11 in the VM-1 is run on the CPU-1, and the vCPU-21 in the VM-2 is run on the CPU-3. Correspondingly, the physical CPU range corresponding to the VM-1 includes the CPU-1, and the physical CPU range corresponding to the VM-2 includes the CPU-2 and the CPU-3. Correspondingly, in this case, the physical CPU range that is globally visible to the software and the hardware and that corresponds to the CPU-1 includes the CPU-1, the physical CPU range that is globally visible to the software and the hardware and that corresponds to the CPU-2 includes the CPU-2 and the CPU-3, and the physical CPU range that is globally visible to the software and the hardware and that corresponds to the CPU-3 includes the CPU-1 and the CPU-3. Based on this, as shown in FIG. 5c, the procedure may include the following steps.

(1) Delete the CPU-2 from the physical CPU range corresponding to the VM-1, and update the physical CPU range corresponding to the CPU-1 based on this. For example, for the CPU-1, cpu_bitmap bit[1]=0, and the physical CPU range that is of the VM-1 and that is visible to the hardware is narrowed down.

(2) Add the CPU-1 to the physical CPU range corresponding to the VM-2, and update the physical CPU range corresponding to the CPU-3 based on this. For example, for the CPU-3, cpu_bitmap bit[1]=1, and the physical CPU range that is of the VM-2 and that is visible to the hardware is expanded.

(3) Before the vCPU-22 in the VM-2 starts to be run on the CPU-2, the physical CPU range (including the CPU-2 and the CPU-3) currently corresponding to the VM-2 is used to overwrite and update the physical CPU range corresponding to the CPU-1. For example, for the CPU-2, cpu_bitmap=physical CPU range.

In conclusion, as shown in FIG. 5c, after the update of the physical CPU range information is completed, for the CPU-1, the first bit of vcpu_bitmap is 1, and other remaining bits are all 0, indicating that in this case, the physical CPU range that is globally visible to the software and the hardware and that corresponds to the CPU-1 includes the CPU-1. For the CPU-2, the second bit and the third bit of vcpu_bitmap are both 1, and other remaining bits are all 0, indicating that in this case, the physical CPU range that is globally visible to the software and the hardware and that corresponds to the CPU-2 includes the CPU-2 and the CPU-3. For the CPU-3, the second bit and the third bit of vcpu_bitmap are both 1, and other remaining bits are all 0, indicating that in this case, the physical CPU range that is globally visible to the software and the hardware and that corresponds to the CPU-3 includes the CPU-2 and the CPU-3.

Step S505: Update, based on the physical CPU range corresponding to the virtual machine to which the first virtual CPU belongs, a physical CPU range that is globally visible to the software and the hardware and that corresponds to the first physical CPU.

Specifically, for step S505, refer to the step S405 in the embodiment corresponding to FIG. 4a. Details are not described herein again.

Further, with reference to the foregoing embodiments, when the M first threads or the M first virtual CPU are run on the M physical CPUs, any thread may modify page table information (that is, page table information maintained by the first process or the first virtual machine) shared by the M threads or the M first virtual CPU. In this case, TLB information maintained by each of the M physical CPUs needs to be synchronously updated based on the modified page table information, to maintain TLB consistency in the physical CPU range S1, and avoid a subsequent TLB access error.

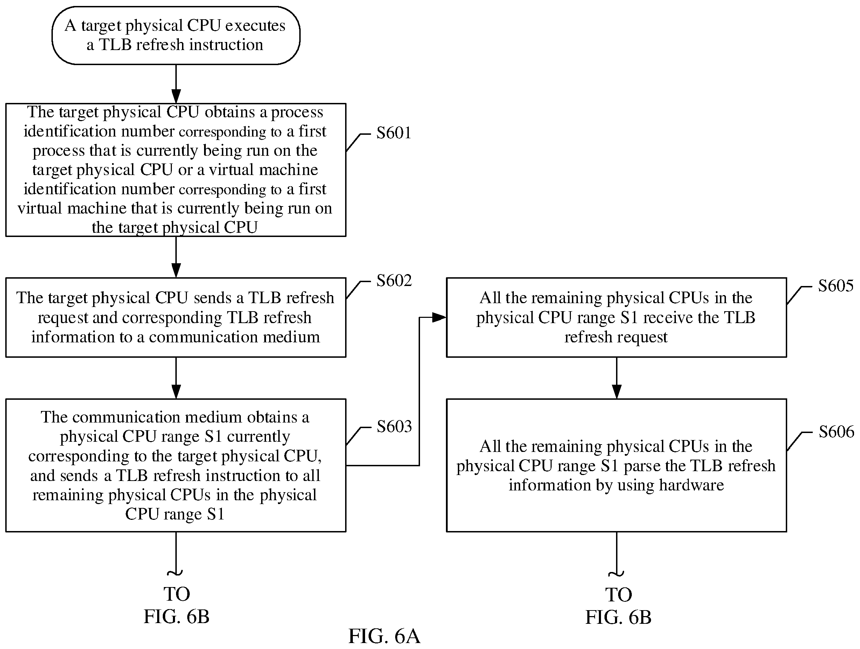

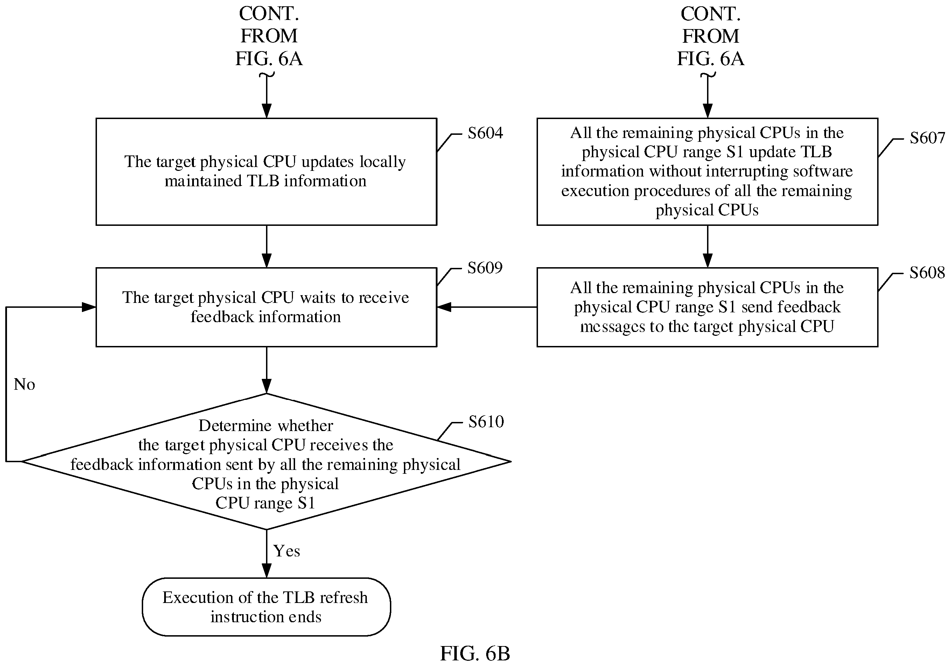

Optionally, FIG. 6A and FIG. 6B are schematic diagrams of a TLB refresh procedure according to an embodiment of this application. As shown in FIG. 6A and FIG. 6B, in a non-virtualization scenario and a virtualization scenario, the TLB refresh procedure may specifically include the following steps S601 to S610.

Step S601: A target physical CPU obtains a process identification number corresponding to a first process that is currently being run on the target physical CPU or a virtual machine identification number corresponding to a first virtual machine that is currently being run on the target physical CPU.

Specifically, if a first thread or a first virtual CPU that is run on the target physical CPU of M physical CPUs modifies page table information maintained by the first process, the target physical CPU may start to execute a TLB refresh instruction. A hardware module corresponding to the instruction may obtain, from a register (for example, a control status register (control status register, CSR)) on a CPU side, a process identification number (for example, a first process identification number) corresponding to a process that is currently being run on the physical CPU or a virtual machine identification number (for example, a first virtual machine identification number) corresponding to a virtual machine that is currently being run on the physical CPU. It may be understood that, the process identification number or the virtual machine identification number may also identify a non-virtualization scenario or a virtualization scenario in which a current physical CPU is located.

Step S602: The target physical CPU sends a TLB refresh request and corresponding TLB refresh information to a communication medium.

Specifically, the target physical CPU sends the TLB refresh request and the corresponding TLB refresh information to the communication medium (for example, an inter-core interconnection network, like a bus or a network-on-chip). In other words, the TLB refresh request carries the corresponding TLB refresh information.

Optionally, in the non-virtualization scenario, the TLB refresh information may include but is not limited to one or more of the process identification number (for example, the first process identification number) corresponding to the first process, or a virtual address and a virtual address range that correspond to modified page table information. This is not specifically limited in embodiments of this application.

Optionally, in the virtualization scenario, the TLB refresh information may include but is not limited to one or more of the virtual machine identification number (for example, the first virtual machine identification number) corresponding to the first virtual machine, or a virtual address and a virtual address range that are in a virtual machine and that correspond to modified page table information. This is not specifically limited in embodiments of this application.

Step S603: The communication medium obtains a physical CPU range S1 currently corresponding to the target physical CPU, and sends the TLB refresh request to all remaining physical CPUs in the physical CPU range S1.

Specifically, after receiving the TLB refresh request sent by the target physical CPU, the communication medium may obtain, from the foregoing physical CPU range information that is globally visible to software and hardware, the physical CPU range S1 corresponding to the target physical CPU, and send the TLB refresh request to all the remaining physical CPUs in the physical CPU range S1.

Therefore, compared with a conventional solution in which a TLB refresh request needs to be sent to all physical CPUs in a system without distinction, in embodiments of this application, a notification scope (that is, a sending scope of the TLB refresh request) may be narrowed down by specifying a necessary physical CPU range. In other words, a TLB maintenance range is narrowed down, and corresponding TLB consistency maintenance needs to be performed only on a physical CPU on which a process (or a virtual machine) that is currently being run, so that a TLB access error can be effectively avoided while efficient, convenient, and accurate TLB consistency maintenance is implemented.

Step S604: The target physical CPU updates locally maintained TLB information.

Specifically, the target physical CPU updates the locally maintained TLB information based on the modified page table information, for example, refreshes or invalidates a corresponding TLB entry.

Optionally, after update of the local TLB information is completed, the target physical CPU may perform step S609, that is, wait for feedback signals of all the remaining physical CPUs.

Step S605: All the remaining physical CPUs in the physical CPU range S1 receive the TLB refresh request.

Specifically, all the remaining physical CPUs in the physical CPU range S1 may receive, by using TLB refresh hardware logic circuits in the physical CPUs, the TLB refresh request sent by the communication medium.

Step S606: All the remaining physical CPUs in the physical CPU range S1 parse the TLB refresh information by using hardware.

Specifically, after receiving the TLB refresh request, all the remaining physical CPUs in the physical CPU range S1 may parse, by using hardware, the TLB refresh information corresponding to the request.

Step S607: All the remaining physical CPUs in the physical CPU range S1 update TLB information without interrupting software execution procedures of all the remaining physical CPUs.

Specifically, all the remaining physical CPUs in the physical CPU range S1 update, by using hardware based on the TLB refresh information, the TLB information maintained by all the remaining physical CPUs. Optionally, a TLB update process is completed by hardware without interrupting the software execution procedures of all the remaining physical CPUs.

As described above, in embodiments of this application, a physical CPU range may be obtained by using hardware, and TLB information parsing and TLB information update may be performed. In this way, a large part of software overheads can be eliminated, and software procedures such as an entry and an exit of the virtual machine, interrupt sending, and an interrupt response are not required, thereby further reducing a TLB consistency maintenance delay and improving TLB consistency maintenance efficiency.

Step S608: All the remaining physical CPUs in the physical CPU range S1 send the feedback messages to the target physical CPU.

Specifically, after update of the TLB information maintained by all the remaining physical CPUs is completed, all the remaining physical CPUs in the physical CPU range S1 may send the feedback signals to the target physical CPU. Optionally, all the remaining physical CPUs may send the feedback signals to the communication medium, and then the communication medium forwards the feedback messages to the target physical CPU. A feedback signal sent by any physical CPU of all the remaining physical CPUs may indicate that the update of the TLB information of the physical CPU is completed.

Step S609: The target physical CPU waits to receive the feedback signals.

Specifically, after update of the local TLB information is completed, the target physical CPU keeps blocked and waits for the feedback signals of all the remaining physical CPUs.

Step S610: Determine whether the target physical CPU receives the feedback signals sent by all the remaining physical CPUs in the physical CPU range S1.

Specifically, if the target physical CPU receives the feedback signals sent by all the remaining physical CPUs in the physical CPU range S1, it may be determined that the TLB information maintained by all the remaining physical CPUs in the physical CPU range S1 is consistent. That is, it is determined that current TLB consistency maintenance is completed, execution of the TLB refresh instruction ends, and further the target physical CPU may execute a subsequent instruction. Alternatively, if the target physical CPU does not receive the feedback signals sent by all the remaining physical CPUs in the physical CPU range S1, the target physical CPU continues to keep blocked until the target physical CPU receives the feedback signals sent by all the remaining physical CPUs in the physical CPU range S1.

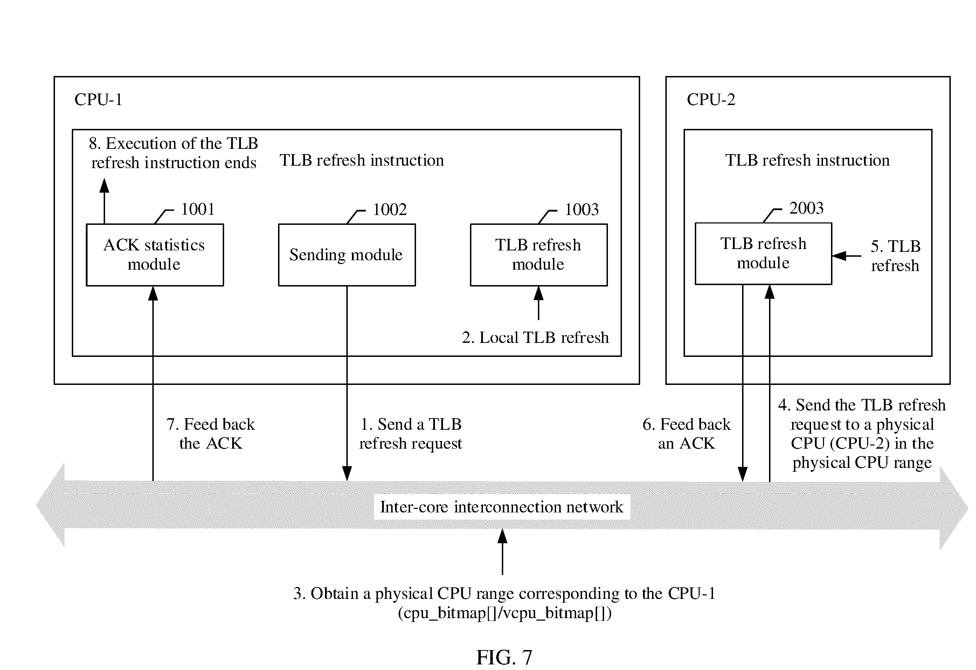

FIG. 7 is a schematic diagram of another TLB refresh procedure according to an embodiment of this application. The procedure method may be applied to a non-virtualization scenario and a virtualization scenario. As shown in FIG. 7, a TLB refresh instruction executed by a CPU-1 (for example, the foregoing target physical CPU) corresponds to hardware modules such as an acknowledgment (acknowledgment, ACK) statistics module 1001, a sending module 1002, and a TLB refresh module 1003. A coverage range of an entire hardware circuit used for TLB refresh may include but is not limited to a plurality of hardware modules on a CPU side and an inter-core interconnection network. As shown in FIG. 7, an example in which a physical CPU range is obtained by using the inter-core interconnection network is used. The TLB refresh procedure is specifically as follows:
1. The CPU-1 executes the TLB refresh instruction, and sends a TLB refresh request and related TLB refresh information to the inter-core interconnection network by using the sending module 1002.
2. The CPU-1 performs local TLB refresh by using the TLB refresh module 1003, that is, updates local TLB information.
3. The inter-core interconnection network receives the TLB refresh request, determines the CPU-1 corresponding to the request, and obtains a physical CPU range (for example, a physical CPU range S1, including a CPU-2) currently corresponding to the CPU-1 from physical CPU range information that is globally visible to software and hardware.
4. The inter-core interconnection network sends the TLB refresh request to all remaining physical CPUs (for example, the CPU-2) in the physical CPU range currently corresponding to the CPU-1.
5. The CPU-2 receives the TLB refresh request by using a TLB refresh module 2003 in the CPU-2, and updates TLB information maintained by the CPU-2.
6. The CPU-2 feeds back an ACK to the inter-core interconnection network by using a TLB refresh module 2003.
7. The inter-core interconnection network feeds back the ACK to the CPU-1, and correspondingly, the CPU-1 receives a feedback signal by using the ACK statistics module 1001 in the CPU-1.
8. After the CPU-1 determines, by using the ACK statistics module 1001 in the CPU-1, that feedback signals of all the remaining physical CPUs in the current physical CPU range are received, execution of the TLB refresh instruction ends, and the CPU-1 may execute a subsequent instruction.

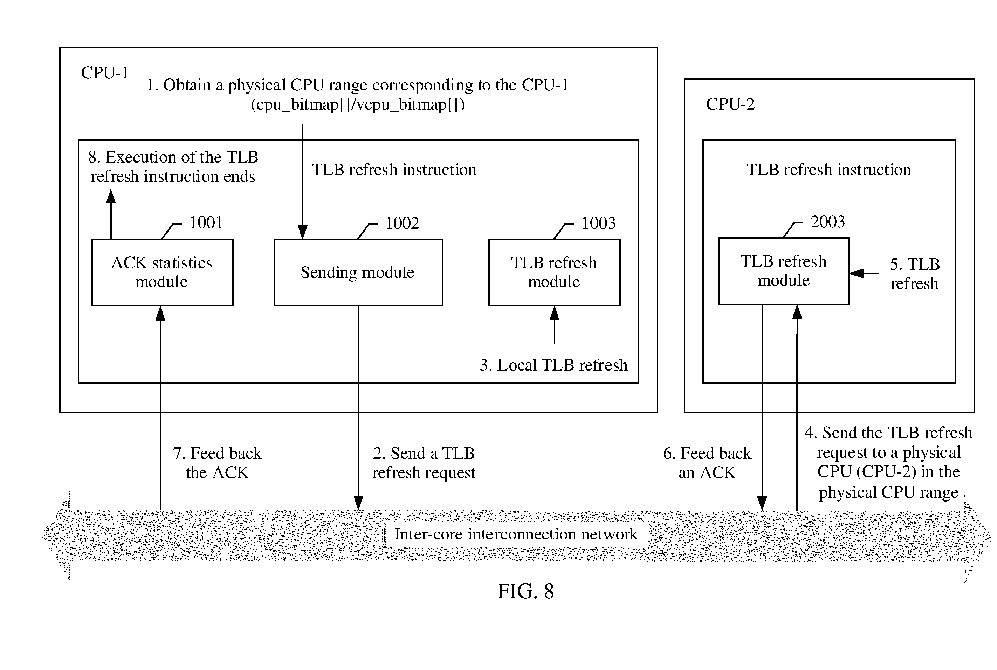

FIG. 8 is a schematic diagram of still another TLB refresh procedure according to an embodiment of this application. For specific descriptions of each part in FIG. 8, refer to descriptions of the embodiment corresponding to FIG. 7. Details are not described herein again. As shown in FIG. 8, in embodiments of this application, the CPU-1 may also directly obtain the physical CPU range currently corresponding to the CPU-1 from the physical CPU range information that is globally visible to the software and the hardware instead of the inter-core interconnection network. As shown in FIG. 8, an example in which the physical CPU range is obtained by using the physical CPU is used. The TLB refresh procedure is specifically as follows:
1. The CPU-1 executes the TLB refresh instruction, and obtains, by using the sending module 1002, the physical CPU range (for example, the physical CPU range S1, including the CPU-2) currently corresponding to the CPU-1 from the physical CPU range information that is globally visible to the software and the hardware.
2. The CPU-1 sends the TLB refresh request and the related TLB refresh information to the inter-core interconnection network by using the sending module 1002. Optionally, the TLB refresh request may carry indication information related to the physical CPU range S1.
3. The CPU-1 performs local TLB refresh by using the TLB refresh module 1003, that is, updates the local TLB information.
4. The inter-core interconnection network receives the TLB refresh request, determines, based on the request, all the remaining physical CPUs (for example, the CPU-2) in the physical CPU range currently corresponding to the CPU-1, and sends the TLB refresh request to the CPU-2.
5. The CPU-2 receives the TLB refresh request by using the TLB refresh module 2003 in the CPU-2, and updates the TLB information maintained by the CPU-2.
6. The CPU-2 feeds back the ACK to the inter-core interconnection network by using the TLB refresh module 2003.
7. The inter-core interconnection network feeds back the ACK to the CPU-1, and correspondingly, the CPU-1 receives the feedback signal by using the ACK statistics module 1001 in the CPU-1.
8. After the CPU-1 determines, by using the ACK statistics module 1001 in the CPU-1, that feedback signals of all the remaining physical CPUs in the current physical CPU range are received, the execution of the TLB refresh instruction ends, and the CPU-1 may execute the subsequent instruction.

In conclusion, in embodiments of this application, a physical CPU range corresponding to a process or a virtual machine may be maintained and updated by using software, and a current physical CPU range is obtained by using hardware, and TLB information is refreshed based on the range, that is, TLB consistency maintenance is performed in the range. In this way, a quantity of physical CPUs on which TLB refresh needs to be performed is greatly reduced, a TLB consistency maintenance delay is reduced, and overall memory access performance of a system is effectively improved.

Optionally, each method procedure in the translation lookaside buffer maintenance method described in embodiments of this application may be specifically implemented based on software, hardware, or a combination thereof. A hardware implementation may include a logic circuit, an algorithm circuit, an analog circuit, or the like. A software implementation may include program instructions. The program instructions may be considered as a software product, stored in a memory, and may be run by a processor to implement a related function.

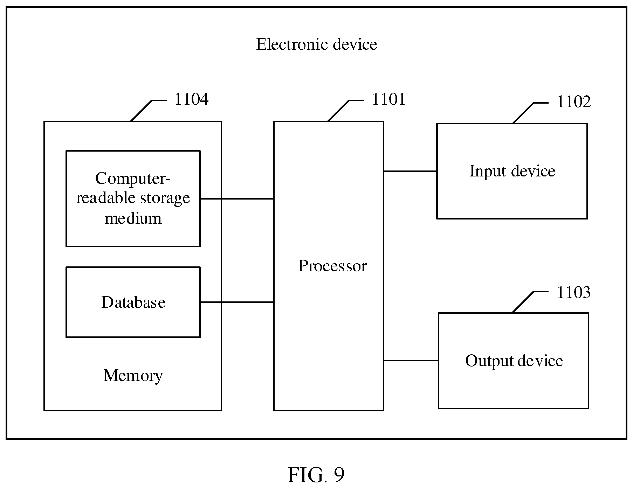

Based on the descriptions of the foregoing method embodiments, an embodiment of this application further provides an electronic device. FIG. 9 is a schematic diagram of a structure of an electronic device according to an embodiment of this application. As shown in FIG. 9, the electronic device includes at least a processor 1101, an input device 1102, an output device 1103, and a computer-readable storage medium 1104. The electronic device may further include another general-purpose component. Details are not described herein again. The processor 1101, the input device 1102, the output device 1103, and the computer-readable storage medium 1104 in the electronic device may be connected by using a bus or in another manner.

The processor 1101 may be a general-purpose central processing unit (CPU), a microprocessor, an application-specific integrated circuit (application-specific integrated circuit, ASIC), or one or more integrated circuits for controlling program execution for the foregoing solutions. In embodiments of this application, the processor 1101 may include a plurality of physical CPUs. A first process is run on the electronic device, the first process currently includes M first threads, the M first threads are currently being respectively run on M physical CPUs of the plurality of physical CPUs. The M physical CPUs may be configured to determine a physical CPU range S1 corresponding to the first process, and the physical CPU range S1 includes the M physical CPUs. The M physical CPUs are further configured to: when page table information maintained by the first process is modified, synchronously update, based on the modified page table information, translation lookaside buffer TLB information maintained by all physical CPUs in the physical CPU range S1.

The memory in the electronic device may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (Electrically Erasable Programmable Read-Only Memory, EEPROM), a compact disc read-only memory (Compact Disc Read-Only Memory, CD-ROM) or another compact disc storage, an optical disc storage (including a compact disc, a laser disc, an optical disc, a digital versatile disc, a Blu-ray disc, or the like), a magnetic disk storage medium, another magnetic storage device, or any other medium that can be configured to carry or store expected program code in a form of an instruction or a data structure and that can be accessed by a computer. However, the memory is not limited thereto. The memory may exist independently, and is connected to the processor through the bus. The memory may alternatively be integrated with the processor.

The computer-readable storage medium 1104 may be stored in the memory of the electronic device. The computer-readable storage medium 1104 is configured to store a computer program, the computer program includes program instructions, and the processor 1101 is configured to execute the program instructions stored in the computer-readable storage medium 1104. The processor 1101 (or referred to as a CPU (Central Processing Unit, central processing unit)) is a computing core and a control core of the electronic device, is configured to implement one or more instructions, and is specifically configured to load and execute the one or more instructions to implement a corresponding method procedure or a corresponding function. In an embodiment, the processor 1101 in this embodiment of this application may be configured to perform a series of processing of a translation lookaside buffer maintenance method, including: determining the physical CPU range S1 corresponding to the first process, where the physical CPU range S1 includes the M physical CPUs; when the page table information maintained by the first process is modified, synchronously updating, based on the modified page table information, the translation lookaside buffer TLB information maintained by all the physical CPUs in the physical CPU range S1; and the like.

It should be noted that, for functions of the functional units in the electronic device described in embodiments of this application, refer to related descriptions of embodiments in FIG. 3 to FIG. 8. Details are not described herein again.

An embodiment of this application further provides a computer-readable storage medium, where the computer-readable storage medium may store a program. When the program is executed by a processor, the processor is enabled to perform some or all steps recorded in any one of the foregoing method embodiments.

An embodiment of this application further provides a computer program, where the computer program includes instructions. When the computer program is executed by a multi-core processor, the processor is enabled to perform some or all steps recorded in any one of the foregoing method embodiments.

In the foregoing embodiments, the description of each embodiment has respective focuses. For a part that is not described in detail in an embodiment, reference may be made to related descriptions in other embodiments. It should be noted that, for brief description, the foregoing method embodiments are represented as a series of action combinations. However, a person skilled in the art should understand that this application is not limited to the described action sequence, because some steps may be performed in other sequences or simultaneously according to this application. It should be further appreciated by a person skilled in the art that embodiments described in this specification all belong to example embodiments, and the involved actions and modules are not necessarily required by this application.

In the several embodiments provided in this application, it should be understood that the disclosed apparatus may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The foregoing units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the foregoing integrated unit is implemented in the form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The software product is stored in a storage medium and includes several instructions for instructing a computer device (which may be a personal computer, a server, or a network device) to perform all or some of the steps of the methods described in embodiments of this application. The foregoing storage medium may include any medium that can store program code, for example, a USB flash drive, a removable hard disk, a magnetic disk, an optical disc, a read-only memory (read-only memory, ROM), a double data rate (double data rate, DDR) synchronous dynamic random access memory, a flash memory (flash), or a random access memory (random access memory, RAM).

The foregoing embodiments are merely intended for describing the technical solutions of this application other than limiting this application.

## Claims

1. A translation lookaside buffer maintenance method, applied to an electronic device, wherein the electronic device comprises a plurality of physical central processing units, CPUs, a first process is run on the electronic device, the first process currently comprises M first threads, the M first threads are currently being respectively run on M physical CPUs of the plurality of physical CPUs, and M is an integer greater than or equal to 1; and the method comprises:
determining (S301) a physical CPU range S1 currently corresponding to the first process, wherein the physical CPU range S1 comprises the M physical CPUs on which the first threads in the first process are currently being run; and
updating (S302), based on page table information maintained by the first process, translation lookaside buffer TLB information maintained by all physical CPUs in the physical CPU range S1,
wherein the M physical CPUs comprise a first physical CPU and M-1 second physical CPUs, wherein before the first thread is run on the first physical CPU, a second thread is run on the first physical CPU, and M-1 first threads of the M first threads are respectively run on the M-1 second physical CPUs; and the method further comprises:
after a thread on the first physical CPU is switched from the second thread to the first thread in the first process, determining whether the second thread belongs to the first process; and
if the second thread does not belong to the first process, updating a physical CPU range S2 corresponding to the first process to obtain the current physical CPU range S1, wherein the physical CPU range S2 comprises the M-1 second physical CPUs on which the first threads in the first process are run before update.

2. The method according to claim 1, wherein the second thread belongs to a second process, wherein before the first thread is run on the first physical CPU, N second threads in the second process are respectively run on the first physical CPU and N-1 third physical CPUs of the plurality of physical CPUs, and N is an integer greater than or equal to 1; and the method further comprises:
after the thread on the first physical CPU is switched from the second thread to the first thread in the first process, updating a physical CPU range S3 corresponding to the second process to obtain a physical CPU range S4, wherein the physical CPU range S3 comprises the first physical CPU and the N-1 third physical CPUs on which the second threads in the second process are run before update, and the physical CPU range S4 comprises the N-1 third physical CPUs on which the second threads in the second process are currently being run.

3. The method according to claim 2, wherein the method further comprises:
updating, based on the updated physical CPU ranges respectively corresponding to the first process and the second process, a physical CPU range corresponding to the first physical CPU from the physical CPU range S3 to the physical CPU range S1; updating a physical CPU range corresponding to each of the M-1 second physical CPUs from the physical CPU range S2 to the physical CPU range S1; and updating a physical CPU range corresponding to each of the N-1 third physical CPUs from the physical CPU range S3 to the physical CPU range S4.

4. The method according to claim 3, wherein the electronic device stores physical CPU range information, the physical CPU range information currently comprises at least the physical CPU range S1 corresponding to each of the M physical CPUs, and the physical CPU range S4 corresponding to each of the N-1 third physical CPUs.

5. The method according to claim 4, wherein the updating, based on page table information maintained by the first process, TLB information maintained by all the physical CPUs in the physical CPU range S1 comprises:
after the page table information maintained by the first process is modified by a first thread that is currently being run on a target physical CPU of the M physical CPUs, updating, based on the modified page table information, TLB information maintained by the target physical CPU; and
sending a TLB refresh request to a remaining physical CPU in the physical CPU range S1 by using the target physical CPU, wherein the TLB refresh request is used by the remaining physical CPU in the physical CPU range S1 to synchronously update TLB information maintained by the remaining physical CPU, so that the TLB information maintained by all the physical CPUs in the physical CPU range S1 is consistent.

6. The method according to claim 5, wherein the sending a TLB refresh request to a remaining physical CPU in the physical CPU range S1 by using the target physical CPU comprises:
sending the TLB refresh request to an inter-core interconnection network by using the target physical CPU, wherein the inter-core interconnection network is a bus or a network-on-chip NOC;
receiving the TLB refresh request by using the inter-core interconnection network, determining that the TLB refresh request corresponds to the target physical CPU, and obtaining, from the physical CPU range information, the physical CPU range S1 corresponding to the target physical CPU; and
sending the TLB refresh request to the remaining physical CPU in the physical CPU range S1 by using the inter-core interconnection network.

7. The method according to claim 5, wherein the sending a TLB refresh request to a remaining physical CPU in the physical CPU range S1 by using the target physical CPU comprises:
obtaining, from the physical CPU range information by using the target physical CPU, the physical CPU range S1 corresponding to the target physical CPU, and sending the TLB refresh request to an inter-core interconnection network, wherein the TLB refresh request carries indication information related to the physical CPU range S1, and the inter-core interconnection network is a bus or a network-on-chip NOC;
receiving the TLB refresh request by using the inter-core interconnection network, and determining the physical CPU range S1 based on the TLB refresh request; and
sending the TLB refresh request to the remaining physical CPU in the physical CPU range S1 by using the inter-core interconnection network.

8. The method according to any one of claims 1 to 7, wherein the method further comprises:
receiving a feedback signal sent by each of the M-1 physical CPUs in the physical CPU range S1, and determining, based on the feedback signal, that the TLB information maintained by all the physical CPUs in the physical CPU range S1 is consistent.

9. The method according to any one of claims 5 to 8, wherein the TLB refresh request carries corresponding TLB refresh information, wherein the TLB refresh information comprises one or more of a process identifier corresponding to the first process, or a virtual address and a virtual address range that correspond to the modified page table information, and the TLB refresh request is specifically used by the remaining physical CPU in the physical CPU range S1 to update, by using hardware based on the TLB refresh information and in a case in which a thread on the remaining physical CPU is kept running, the TLB information maintained by the remaining physical CPU.

10. A translation lookaside buffer maintenance method, applied to an electronic device, wherein the electronic device comprises a plurality of physical central processing units CPUs, a first virtual machine is run on the electronic device, the first virtual machine currently comprises M first virtual CPUs, the M first virtual CPUs are currently being respectively run on M physical CPUs of the plurality of physical CPUs, and M is an integer greater than or equal to 1; and the method comprises:
determining a physical CPU range S1 corresponding to the first virtual machine, wherein the physical CPU range S1 comprises the M physical CPUs on which the first virtual CPUs in the first virtual machine are currently being run; and
updating, based on page table information maintained by the first virtual machine, translation lookaside buffer TLB information maintained by all physical CPUs in the physical CPU range S1
wherein the M physical CPUs comprise a first physical CPU and M-1 second physical CPUs, wherein before the first virtual CPU is run on the first physical CPU, a second virtual CPU is run on the first physical CPU, and M-1 first virtual CPUs of the M first virtual CPUs are respectively run on the M-1 second physical CPUs; and the method further comprises:
after a virtual CPU on the first physical CPU is switched from the second virtual CPU to the first virtual CPU in the first virtual machine, determining whether the second virtual CPU belongs to the first virtual machine; and
if the second virtual CPU does not belong to the first virtual machine, updating a physical CPU range S2 corresponding to the first virtual machine to obtain the current physical CPU range S1, wherein the physical CPU range S2 comprises the M-1 second physical CPUs on which the first virtual CPUs in the first virtual machine are run before update.

11. An electronic device, wherein the electronic device comprises a plurality of physical central processing units, CPUs; a first process is run on the electronic device, the first process currently comprises M first threads, and the M first threads are currently being respectively run on M physical CPUs of the plurality of physical CPUs; M is an integer greater than 1; and the M physical CPUs are configured to implement the method according to claims 1 to 9.

12. An electronic device, wherein the electronic device comprises a plurality of physical central processing units CPUs; a first virtual machine is run on the electronic device, the first virtual machine currently comprises M first virtual CPUs, and the M first virtual CPUs are currently being respectively run on M physical CPUs of the plurality of physical CPUs; M is an integer greater than 1; and the M physical CPUs are configured to implement the method according to claim 10.

13. A computer-readable storage medium, wherein the computer-readable storage medium stores a computer program, and when the computer program is executed by a computer or a processor, the method according to claims 1 to 9 or claim 10 is implemented.

## Patentansprüche

1. Übersetzungspufferwartungsverfahren, das auf eine elektronische Vorrichtung angewandt wird, wobei die elektronische Vorrichtung eine Vielzahl physischer zentraler Verarbeitungseinheiten, CPUs, umfasst, ein erster Prozess auf der elektronischen Vorrichtung ausgeführt wird, der erste Prozess aktuell M erste Threads umfasst, die M ersten Threads aktuell jeweils auf M physischen CPUs der Vielzahl physischer CPUs ausgeführt werden und M eine Ganzzahl größer als oder gleich 1 ist; und das Verfahren Folgendes umfasst:
Bestimmen (S301) eines Bereichs S1 von physischen CPUs, der aktuell dem ersten Prozess entspricht, wobei der Bereich S1 von physischen CPUs die M physischen CPUs, auf denen die ersten Threads in dem ersten Prozess aktuell ausgeführt werden, umfasst; und
Aktualisieren (S302), basierend auf Seitentabelleninformationen, die durch den ersten Prozess gewartet werden, von Übersetzungspufferinformationen, TLB-Informationen, die durch alle physischen CPUs in dem Bereich S1 von physischen CPUs gewartet werden,
wobei die M physischen CPUs eine erste physische CPU und M-1 zweite physische CPUs umfassen, wobei, bevor der erste Thread auf der ersten physischen CPU ausgeführt wird, ein zweiter Thread auf der ersten physischen CPU ausgeführt wird und M-1 erste Threads der M ersten Threads jeweils auf den M-1 zweiten physischen CPUs ausgeführt werden; und das Verfahren ferner Folgendes umfasst:
nachdem ein Thread auf der ersten physischen CPU von dem zweiten Thread auf den ersten Thread in dem ersten Prozess umgeschaltet ist, Bestimmen, ob der zweite Thread zu dem ersten Prozess gehört; und
falls der zweite Thread nicht zu dem ersten Prozess gehört, Aktualisieren eines Bereichs S2 von physischen CPUs, der dem ersten Prozess entspricht, um den aktuellen Bereich S1 von physischen CPUs zu erlangen, wobei der Bereich S2 von physischen CPUs die M-1 zweiten physischen CPUs, auf denen die ersten Threads in dem ersten Prozess vor dem Aktualisieren ausgeführt werden, umfasst.

2. Verfahren nach Anspruch 1, wobei der zweite Thread zu einem zweiten Prozess gehört, wobei, bevor der erste Thread auf der ersten physischen CPU ausgeführt wird, N zweite Threads in dem zweiten Prozess jeweils auf der ersten physischen CPU und den N-1 dritten physischen CPUs der Vielzahl physischer CPUs ausgeführt werden und N eine Ganzzahl größer als oder gleich 1 ist; und das Verfahren ferner Folgendes umfasst:
nachdem der Thread auf der ersten physischen CPU von dem zweiten Thread auf den ersten Thread in dem ersten Prozess umgeschaltet ist, Aktualisieren eines Bereichs S3 von physischen CPUs, der dem zweiten Prozess entspricht, um einen Bereich S4 von physischen CPUs zu erlangen, wobei der Bereich S3 von physischen CPUs die erste physische CPU und die N-1 dritten physischen CPUs, auf denen die zweiten Threads in dem zweiten Prozess vor dem Aktualisieren ausgeführt werden, umfasst und der Bereich S4 von physischen CPUs die N-1 dritten physischen CPUs, auf denen die zweiten Threads in dem zweiten Prozess aktuell ausgeführt werden, umfasst.

3. Verfahren nach Anspruch 2, wobei das Verfahren ferner Folgendes umfasst:
Aktualisieren, basierend auf den aktualisierten Bereichen von physischen CPUs, die dem ersten Prozess beziehungsweise dem zweiten Prozess entsprechen, eines Bereichs von physischen CPUs, welcher der ersten physischen CPU entspricht, von dem Bereich S3 von physischen CPUs auf den Bereich S1 von physischen CPUs;
Aktualisieren eines Bereichs von physischen CPUs, der jeder der M-1 zweiten physischen CPUs entspricht, von dem Bereich S2 von physischen CPUs auf den Bereich S1 von physischen CPUs; und
Aktualisieren eines Bereichs von physischen CPUs, der jeder der N-1 dritten physischen CPUs entspricht, von dem Bereich S3 von physischen CPUs auf den Bereich S4 von physischen CPUs.

4. Verfahren nach Anspruch 3, wobei die elektronische Vorrichtung Bereichsinformationen von physischen CPUs speichert und die Bereichsinformationen von physischen CPUs aktuell mindestens den Bereich S1 von physischen CPUs, der jeder der M physischen CPUs entspricht, und den Bereich S4 von physischen CPUs, der jeder der N-1 dritten physischen CPUs entspricht, umfassen.

5. Verfahren nach Anspruch 4, wobei das Aktualisieren, basierend auf Seitentabelleninformationen, die durch den ersten Prozess gewartet werden, von TLB-Informationen, die durch alle physischen CPUs in dem Bereich S1 von physischen CPUs gewartet werden, Folgendes umfasst:
nachdem die Seitentabelleninformationen, die durch den ersten Prozess gewartet werden, durch einen ersten Thread, der aktuell auf einer physischen Ziel-CPU der M physischen CPUs ausgeführt wird, modifiziert sind, Aktualisieren, basierend auf den modifizierten Seitentabelleninformationen, von TLB-Informationen, die durch die physische Ziel-CPU gewartet werden; und
Senden einer TLB-Neuladungsanforderung an eine verbleibende physische CPU in dem Bereich S1 von physischen CPUs unter Verwendung der physischen Ziel-CPU, wobei die TLB-Neuladungsanforderung durch die verbleibende physische CPU in dem Bereich S1 von physischen CPUs dazu verwendet wird, TLB-Informationen, die durch die verbleibende physische CPU gewartet werden, synchron zu aktualisieren, sodass die TLB-Informationen, die durch alle physischen CPUs in dem Bereich S1 von physischen CPUs gewartet werden, konsistent sind.

6. Verfahren nach Anspruch 5, wobei das Senden einer TLB-Neuladungsanforderung an eine verbleibende physische CPU in dem Bereich S1 von physischen CPUs unter Verwendung der physischen Ziel-CPU Folgendes umfasst:
Senden der TLB-Neuladungsanforderung an ein Inter-Kernverbindungsnetz unter Verwendung der physischen Ziel-CPU, wobei das Inter-Kernverbindungsnetz ein Bus oder ein Netz auf einem Chip, NOC, ist;
Empfangen der TLB-Neuladungsanforderung unter Verwendung des Inter-Kernverbindungsnetzes, Bestimmen, dass die TLB-Neuladungsanforderung der physischen Ziel-CPU entspricht, und Erlangen, aus den Bereichsinformationen von physischen CPUs, des Bereichs S1 von physischen CPUs, welcher der physischen Ziel-CPU entspricht; und
Senden der TLB-Neuladungsanforderung an die verbleibende physische CPU in dem Bereich S1 von physischen CPUs unter Verwendung des Inter-Kernverbindungsnetzes.

7. Verfahren nach Anspruch 5, wobei das Senden einer TLB-Neuladungsanforderung an eine verbleibende physische CPU in dem Bereich S1 von physischen CPUs unter Verwendung der physischen Ziel-CPU Folgendes umfasst:
Erlangen, aus den Bereichsinformationen von physischen CPUs unter Verwendung der physischen Ziel-CPU, des Bereichs S1 von physischen CPUs, welcher der physischen Ziel-CPU entspricht, und Senden der TLB-Neuladungsanforderung an ein Inter-Kernverbindungsnetz, wobei die TLB-Neuladungsanforderung Angabeinformationen in Bezug auf den Bereich S1 von physischen CPUs enthält und das Inter-Kernverbindungsnetz ein Bus oder ein Netz auf einem Chip, NOC, ist;
Empfangen der TLB-Neuladungsanforderung unter Verwendung des Inter-Kernverbindungsnetzes und Bestimmen des Bereichs S1 von physischen CPUs basierend auf der TLB-Neuladungsanforderung; und
Senden der TLB-Neuladungsanforderung an die verbleibende physische CPU in dem Bereich S1 von physischen CPUs unter Verwendung des Inter-Kernverbindungsnetzes.

8. Verfahren nach einem der Ansprüche 1 bis 7, wobei das Verfahren ferner Folgendes umfasst:
Empfangen eines Rückmeldungssignals, das durch jede der M-1 physischen CPUs in dem Bereich S1 von physischen CPUs gesendet wird, und Bestimmen, basierend auf dem Rückmeldungssignal, dass die TLB-Informationen, die durch alle physischen CPUs in dem Bereich S1 von physischen CPUs gewartet werden, konsistent sind.

9. Verfahren nach einem der Ansprüche 5 bis 8, wobei die TLB-Neuladungsanforderung entsprechende TLB-Neuladungsinformationen enthält, wobei die TLB-Neuladungsinformationen eines oder mehrere einer Prozesskennung, die dem ersten Prozess entspricht, oder einer virtuellen Adresse und eines virtuellen Adressbereichs, die den modifizierten Seitentabelleninformationen entsprechen, umfassen und die TLB-Neuladungsanforderung durch die verbleibende physische CPU in dem Bereich S1 von physischen CPUs speziell dazu verwendet wird, unter Verwendung einer Hardware basierend auf den TLB-Neuladungsinformationen und in einem Fall, in dem ein Thread auf der verbleibenden physischen CPU weiter ausgeführt wird, die TLB-Informationen, die durch die verbleibende physische CPU gewartet werden, zu aktualisieren.

10. Übersetzungspufferwartungsverfahren, das auf eine elektronische Vorrichtung angewandt wird, wobei die elektronische Vorrichtung eine Vielzahl physischer zentraler Verarbeitungseinheiten, CPUs, umfasst, eine erste virtuelle Maschine auf der elektronischen Vorrichtung ausgeführt wird, die erste virtuelle Maschine aktuell M erste virtuelle CPUs umfasst, die M ersten virtuellen CPUs aktuell jeweils auf M physischen CPUs der Vielzahl physischer CPUs ausgeführt werden und M eine Ganzzahl größer als oder gleich 1 ist; und das Verfahren Folgendes umfasst:
Bestimmen eines Bereichs S1 von physischen CPUs, welcher der ersten virtuellen Maschine entspricht, wobei der Bereich S1 von physischen CPUs die M physischen CPUs, auf denen die ersten virtuellen CPUs in der ersten virtuellen Maschine aktuell ausgeführt werden, umfasst; und
Aktualisieren, basierend auf Seitentabelleninformationen, die durch die erste virtuelle Maschine gewartet werden, von Übersetzungspufferinformationen, TLB-Informationen, die durch alle physischen CPUs in dem Bereich S1 von physischen CPUs gewartet werden,
wobei die M physischen CPUs eine erste physische CPU und M-1 zweite physische CPUs umfassen, wobei, bevor die erste virtuelle CPU auf der ersten physischen CPU ausgeführt wird, eine zweite virtuelle CPU auf der ersten physischen CPU ausgeführt wird und M-1 erste virtuelle CPUs der M ersten virtuellen CPUs jeweils auf den M-1 zweiten physischen CPUs ausgeführt werden; und das Verfahren ferner Folgendes umfasst:
nachdem eine virtuelle CPU auf der ersten physischen CPU von der zweiten virtuellen CPU auf die erste virtuelle CPU in der ersten virtuellen Maschine umgeschaltet ist, Bestimmen, ob die zweite virtuelle CPU zu der ersten virtuellen Maschine gehört; und
falls die zweite virtuelle CPU nicht zu der ersten virtuellen Maschine gehört, Aktualisieren eines Bereichs S2 von physischen CPUs, welcher der ersten virtuellen Maschine entspricht, um den aktuellen Bereich S1 von physischen CPUs zu erlangen, wobei der Bereich S2 von physischen CPUs die M-1 zweiten physischen CPUs, auf denen die ersten virtuellen CPUs in der ersten virtuellen Maschine vor dem Aktualisieren ausgeführt werden, umfasst.

11. Elektronische Vorrichtung, wobei die elektronische Vorrichtung eine Vielzahl physischer zentraler Verarbeitungseinheiten, CPUs, umfasst; ein erster Prozess auf der elektronischen Vorrichtung ausgeführt wird, der erste Prozess aktuell M erste Threads umfasst und die M ersten Threads aktuell jeweils auf M physischen CPUs der Vielzahl physischer CPUs ausgeführt werden; M eine Ganzzahl größer als 1 ist; und die M physischen CPUs dazu konfiguriert sind, das Verfahren nach Anspruch 1 bis 9 umzusetzen.

12. Elektronische Vorrichtung, wobei die elektronische Vorrichtung eine Vielzahl physischer zentraler Verarbeitungseinheiten, CPUs, umfasst; eine erste virtuelle Maschine auf der elektronischen Vorrichtung ausgeführt wird, die erste virtuelle Maschine aktuell M erste virtuelle CPUs umfasst und die M ersten virtuellen CPUs aktuell jeweils auf M physischen CPUs der Vielzahl physischer CPUs ausgeführt werden; M eine Ganzzahl größer als 1 ist; und die M physischen CPUs dazu konfiguriert sind, das Verfahren nach Anspruch 10 umzusetzen.

13. Computerlesbares Speichermedium, wobei das computerlesbare Speichermedium ein Computerprogramm speichert und, wenn das Computerprogramm durch einen Computer oder einen Prozessor ausgeführt wird, das Verfahren nach Anspruch 1 bis 9 oder Anspruch 10 umgesetzt wird.

## Revendications

1. Procédé de maintenance de tampon de traduction, appliqué à un dispositif électronique, dans lequel le dispositif électronique comprend une pluralité d'unités centrales de traitement, CPU, physiques, un premier processus est exécuté sur le dispositif électronique, le premier processus comprend actuellement M premiers fils, les M premiers fils sont actuellement exécutés respectivement sur M CPU physiques de la pluralité de CPU physiques, et M est un entier supérieur ou égal à 1 ; et le procédé comprend :
la détermination (S301) d'une plage de CPU physiques S1 correspondant actuellement au premier processus, dans lequel la plage de CPU physiques S1 comprend les M CPU physiques sur lesquels les premiers fils dans le premier processus sont actuellement exécutés ; et
la mise à jour (S302), sur la base d'informations de table des pages maintenue par le premier processus, d'informations de tampon de traduction TLB maintenues par toutes les CPU physiques dans la plage de CPU physiques S1,
dans lequel les M CPU physiques comprennent une première CPU physique et M-1 deuxièmes CPU physiques, dans lequel avant l'exécution du premier fil sur la première CPU physique, un second fil est exécuté sur la première CPU physique, et M-1 premiers fils des M premiers fils sont respectivement exécutés sur les M-1 deuxièmes CPU physiques ; et le procédé comprend également :
après qu'un fil sur la première CPU physique est passé du second fil au premier fil dans le premier processus, le fait de déterminer si le second fil appartient au premier processus ; et
si le second fil n'appartient pas au premier processus, la mise à jour d'une plage de CPU physiques S2 correspondant au premier processus pour obtenir la plage de CPU physiques actuelle S1, dans lequel la plage de CPU physiques S2 comprend les M-1 deuxièmes CPU physiques sur lesquelles les premiers fils dans le premier processus sont exécutés avant la mise à jour.

2. Procédé selon la revendication 1, dans lequel le second fil appartient à un second processus, dans lequel avant que le premier fil soit exécuté sur la première CPU physique, N seconds fils du second processus sont exécutés respectivement sur la première CPU physique et N-1 troisièmes CPU physiques de la pluralité de CPU physiques, et N est un entier supérieur ou égal à 1 ; et le procédé comprend également :
après que le fil sur la première CPU physique est passé du second fil au premier fil dans le premier processus, la mise à jour d'une plage de CPU physiques S3 correspondant au second processus pour obtenir une plage de CPU physiques S4, dans lequel la plage de CPU physiques S3 comprend la première CPU physique et les N-1 troisièmes CPU physiques sur lesquelles les seconds fils dans le second processus sont exécutés avant la mise à jour, et la plage de CPU physiques S4 comprend les N-1 troisièmes CPU physiques sur lesquels les seconds fils dans le second processus sont actuellement exécutés.

3. Procédé selon la revendication 2, dans lequel le procédé comprend également :
la mise à jour, sur la base des plages de CPU physiques mises à jour correspondant respectivement au premier processus et au second processus, d'une plage de CPU physiques correspondant à la première CPU physique de la plage de CPU physiques S3 à la plage de CPU physiques S1 ; la mise à jour d'une plage de CPU physiques correspondant à chacun des M-1 deuxièmes CPU physiques de la plage de CPU physiques S2 à la plage de CPU physiques S1 ; et la mise à jour d'une plage de CPU physiques correspondant à chacun des N-1 troisièmes CPU physiques de la plage de CPU physiques S3 à la plage de CPU physiques S4.

4. Procédé selon la revendication 3, dans lequel le dispositif électronique stocke des informations de plage de CPU physiques, les informations de plage de CPU physiques comprennent actuellement au moins la plage de CPU physiques S1 correspondant à chacun des M CPU physiques, et la plage de CPU physiques S4 correspondant à chacun des N-1 troisièmes CPU physiques.

5. Procédé selon la revendication 4, dans lequel la mise à jour, sur la base d'informations de table des pages maintenues par le premier processus, d'informations de TLB maintenues par toutes les CPU physiques dans la plage de CPU physiques S1 comprend :
après que les informations de table des pages maintenues par le premier processus sont modifiées par un premier fil qui est actuellement exécuté sur une CPU physique cible des M CPU physiques, la mise à jour, sur la base des informations de table des pages modifiées, des informations de TLB maintenues par la CPU physique cible ; et
l'envoi d'une demande d'actualisation de TLB à une CPU physique restante dans la plage de CPU physiques S1 en utilisant la CPU physique cible, dans lequel la demande d'actualisation de TLB est utilisée par la CPU physique restante dans la plage de CPU physiques S1 pour mettre à jour de manière synchrone les informations de TLB maintenues par la CPU physique restante, de sorte que les informations de TLB maintenues par toutes les CPU physiques dans la plage de CPU physiques S1 sont cohérentes.

6. Procédé selon la revendication 5, dans lequel l'envoi d'une demande d'actualisation de TLB à une CPU physique restante dans la plage de CPU physiques S1 en utilisant la CPU physique cible comprend :
l'envoi de la demande d'actualisation de TLB à un réseau d'interconnexion inter-cœurs en utilisant la CPU physique cible, dans lequel le réseau d'interconnexion inter-cœurs est un bus ou un réseau sur puce NOC ;
la réception de la demande d'actualisation de TLB en utilisant le réseau d'interconnexion inter-cœurs, la détermination que la demande d'actualisation de TLB correspond à la CPU physique cible, et l'obtention, à partir des informations de plage de CPU physiques, de la plage de CPU physiques S1 correspondant à la CPU physique cible ; et
l'envoi de la demande d'actualisation de TLB à la CPU physique restante dans la plage de CPU physiques S1 en utilisant le réseau d'interconnexion inter-cœurs.

7. Procédé selon la revendication 5, dans lequel l'envoi d'une demande d'actualisation de TLB à une CPU physique restante dans la plage de CPU physiques S1 en utilisant la CPU physique cible comprend :
l'obtention, à partir des informations de plage de CPU physiques en utilisant la CPU physique cible, de la plage de CPU physiques S1 correspondant à la CPU physique cible, et l'envoi de la demande d'actualisation de TLB à un réseau d'interconnexion inter-cœurs,
dans lequel la demande d'actualisation de TLB contient des informations d'indication relatives à la plage de CPU physiques S1, et le réseau d'interconnexion inter-cœurs est un bus ou un réseau sur puce NOC ;
la réception de la demande d'actualisation de TLB en utilisant le réseau d'interconnexion inter-cœurs, et la détermination de la plage de CPU physiques S1 sur la base de la demande d'actualisation de TLB ; et
l'envoi de la demande d'actualisation de TLB à la CPU physique restante dans la plage de CPU physiques S1 en utilisant le réseau d'interconnexion inter-cœurs.

8. Procédé selon l'une quelconque des revendications 1 à 7, dans lequel le procédé comprend également :
la réception d'un signal de retour envoyé par chacune des M-1 CPU physiques dans la plage de CPU physiques S1, et la détermination, sur la base du signal de retour, que les informations de TLB maintenues par toutes les CPU physiques dans la plage de CPU physiques S1 sont cohérentes.

9. Procédé selon l'une quelconque des revendications 5 à 8, dans lequel la demande d'actualisation de TLB contient des informations d'actualisation de TLB correspondantes, dans lequel les informations d'actualisation de TLB comprennent l'un ou plusieurs d'un identifiant de processus correspondant au premier processus, ou d'une adresse virtuelle et d'une plage d'adresses virtuelles qui correspond aux informations de table des pages modifiées, et la demande d'actualisation de TLB est spécifiquement utilisée par la CPU physique restante dans la plage de CPU physiques S1 pour mettre à jour, en utilisant un matériel sur la base des informations d'actualisation de TLB et dans un cas dans lequel un fil sur la CPU physique restante est laissé en cours d'exécution, les informations de TLB étant maintenues par la CPU physique restante.

10. Procédé de maintenance de tampon de traduction, appliqué à un dispositif électronique, dans lequel le dispositif électronique comprend une pluralité d'unités centrales de traitement ,CPU, physiques, une première machine virtuelle est exécutée sur le dispositif électronique, la première machine virtuelle comprend actuellement M premières CPU virtuelles, les M premières CPU virtuelles sont actuellement exécutées respectivement sur M CPU physiques de la pluralité de CPU physiques, et M est un entier supérieur ou égal à 1 ; et le procédé comprend :
la détermination d'une plage de CPU physiques S1 correspondant à la première machine virtuelle, dans lequel la plage de CPU physiques S1 comprend les M CPU physiques sur lesquelles les premières CPU virtuelles dans la première machine virtuelle sont actuellement exécutés ; et
la mise à jour, sur la base d'informations de table des pages maintenues par la première machine virtuelle, d'informations de tampon de traduction TLB maintenues par toutes les CPU physiques dans la plage de CPU physiques S1
dans lequel les M CPU physiques comprennent une première CPU physique et M-1 deuxièmes CPU physiques, dans lequel avant que la première CPU virtuelle soit exécutée sur la première CPU physique,
une seconde CPU virtuelle est exécutée sur la première CPU physique, et M-1 premières CPU virtuelles des M premières CPU virtuelles sont respectivement exécutés sur les M-1 deuxièmes CPU physiques ; et le procédé comprend également :
après qu'une CPU virtuelle sur le première CPU physique est passée de la seconde CPU virtuelle à la première CPU virtuelle dans la première machine virtuelle, le fait de déterminer si la seconde CPU virtuelle appartient à la première machine virtuelle ; et
si la seconde CPU virtuelle n'appartient pas à la première machine virtuelle, la mise à jour d'une plage de CPU physiques S2 correspondant à la première machine virtuelle pour obtenir la plage de CPU physiques actuelle S1, dans lequel la plage de CPU physiques S2 comprend les M-1 deuxièmes CPU physiques sur lesquelles les premières CPU virtuelles dans la première machine virtuelle sont exécutées avant la mise à jour.

11. Dispositif électronique, dans lequel le dispositif électronique comprend une pluralité d'unités centrales de traitement ,CPU, physiques ; un premier processus est exécuté sur le dispositif électronique, le premier processus comprend actuellement M premiers fils, et les M premiers fils sont actuellement exécutés respectivement sur M CPU physiques de la pluralité de CPU physiques ; M est un entier supérieur à 1 ; et les M CPU physiques sont configurées pour mettre en œuvre le procédé selon les revendications 1 à 9.

12. Dispositif électronique, dans lequel le dispositif électronique comprend une pluralité d'unités centrales de traitement , CPU, physiques ; une première machine virtuelle est exécutée sur le dispositif électronique, la première machine virtuelle comprend actuellement M premières CPU virtuelles, et les M premières CPU virtuelles sont actuellement exécutées respectivement sur M CPU physiques de la pluralité de CPU physiques ; M est un entier supérieur à 1 ; et les M CPU physiques sont configurées pour mettre en œuvre le procédé selon la revendication 10.

13. Support de stockage lisible par ordinateur, dans lequel le support de stockage lisible par ordinateur stocke un programme informatique, et lorsque le programme informatique est exécuté par un ordinateur ou un processeur, le procédé selon les revendications 1 à 9 ou la revendication 10 est mis en œuvre.
